# EUROPEAN PATENT SPECIFICATION

(11) **EP 4 630 225 B1**
(45) Date of publication and mention of the grant of the patent: **04.11.2026**
(21) Application number: 23806002.4
(22) Date of filing: 16.11.2023
(51) Int. Cl.: B29C 65/78, B65H 21/00, B29C 65/62, B29D 30/42, B29L 30/00

(54) **APPARATUS AND METHOD FOR SPLICING A TIRE COMPONENT**
VORRICHTUNG UND VERFAHREN ZUM SPLEISSEN EINER REIFENKOMPONENTE
APPAREIL ET PROCÉDÉ D'ÉPISSAGE D'UN ÉLÉMENT CONSTITUTIF DE PNEU

(30) Priority: 07.12.2022 NL 2033685
(43) Date of publication of application: 15.10.2025
(73) Proprietor: VMI Holland B.V., 8161 RK Epe (NL)
(72) Inventor: VAN TIENEN, Luuk, 8161 RK EPE (NL); DE BOER, Hans, 8161 RK EPE (NL); PIETERS, Erwin Jacobus Adrianus, 8161 RK EPE (NL)
(74) Representative: Melchior, Robin
(86) International application number: PCT/EP2023/082118
(87) International publication number: WO 2024/120791

(56) References cited:
- WO-A1-2017/007303
- US-A1- 2016 136 908
- US-A1- 2020 391 462

## Description

### BACKGROUND

The invention relates to an apparatus for splicing a leading end of a tire component to a trailing end of the same or another tire component. Furthermore, the invention relates to method for splicing a leading end of a tire component to a trailing end of the same or another tire component.

WO 2017007303 A1 discloses an apparatus and a method for splicing together a leading end and a trailing end of a tire component wound around a tire building drum. The leading end and the trailing end are joined together by butt-splicing in order to form a continuous loop of the tire component. The splicing process is performed on tire components which comprise uncured rubber, which as a result strongly and rapidly adhere to each other on contact. To prevent premature bonding of the trailing end to the leading end, or to other tire components already present on the tire building drum, the leading end and the trailing end are arranged on a separator which separates the leading end and the trailing end from an outer surface of the tire building drum to form a separation space. US 2016/136908 A1 discloses an apparatus and a method for splicing a leading and a trailing end of one or more strip-shaped members on a surface to butt against each other and to butt join these ends.

The apparatus comprises a splicer unit with a splicer foot to support the leading end and the trailing end from the separation space from underneath and a splicer head for splicing the leading end and the trailing end on the splicer foot along a splice line from outside the separation space. The splicer head comprises splice rollers and a splicer drive for driving the splice rollers for splicing the leading end and the trailing end, and at the same time pulling the splicer unit along a splicer line. In addition, the apparatus further comprises a separator drive for retracting the separator along the splicer line, and a control unit to control the separator drive and the splicer drive simultaneously such that, during the splicing for forming the splice line, both the separator and the splicer unit are driven along the splicer line, wherein the separator is retracted ahead of the splicer unit.

### SUMMARY OF THE INVENTION

Although the known apparatus or method provides a suitable result, it has been found that in some instances the consistency of the splice or joint differs along a length of the splice or joint.

It is an object of the present invention to provide an apparatus and a method for splicing a leading end of a tire component to a trailing end of the same or another tire component that provides an improved consistency of the splice or joint.

According to a first aspect, the invention provides an apparatus for splicing a leading end of a tire component to a trailing end of the same or another tire component, wherein the apparatus comprises:
a splicer unit with a splicer head that is moveable along a splicer track for splicing the leading end to the trailing end;
a tire building drum comprising a circumferential working surface for supporting the tire component, wherein the working surface is arranged spaced apart from and facing towards the splicer head, and wherein the tire building drum comprises a drive for rotating the working surface about a first rotation axis and for generating a correction motion of the working surface in a circumferential direction about said first rotation axis, wherein the correcting motion of the working surface comprises a first vector component in a correction direction perpendicular to the splicer track for positioning the leading end and the trailing end relative to the splicer track;
a separator body for separating the leading end and the trailing end from the working surface, wherein the separator body is arranged between or at least substantially between the splicer head and the working surface when considered in a direction extending perpendicularly outwards from the working surface, wherein the separator body comprises a support surface at a side of the separator body facing away from the working surface for supporting the leading end and the trailing end at a distance from the working surface, wherein the correction direction extends perpendicular to a radial line of the tire building drum that intersects the separator body in a separation position; and
a separator drive for moving the separator body in a direction parallel or substantially parallel to the splicer track,
wherein the separator drive comprises a coupling assembly which is configured for providing that the separator body is movable with a second vector component in the correction direction for at least partially following the correction motion of the working surface.

The inventors realized that a reason for an observed reduction in a consistency of a splice joint along its length can occur when the splicer track, along which the splicer unit is moveable to splice together the leading end and the trailing end, deviates from an actual geometry of the leading end and the trailing end. For example, when the splicer track is a substantially straight line, and the leading end and/or the trailing end is angled or undulates with respect to the splicer track and/or with respect to each other, the local spacing and/or position of the splicer head, with respect to a portion of the leading end and/or the trailing end that is to be spliced, may vary as the splicer head travels along splicer track. Accordingly, if said variations of the spacing and/or position are not corrected, the quality and/or consistency of the splice or joint will differ along the length of the splice or joint.

Furthermore, or alternatively, the leading end and/or the trailing end may be arranged on the separator body such that the leading end and/or the trailing end is offset from the splicer track away from an optimal offset centered with respect to the splicer track.

The apparatus according to the present invention is provided with a drive for generating the correction motion of the working surface with at least a first vector component in the correction direction perpendicular to the splicer track for positioning the leading end and the trailing end relative to the splicer track of the splicer head. In particular, the working surface is back and forth movable to provide the correction motion in the desired direction to position a center between the leading end and the trailing end relative to the splicer track to at least reduce a local distance between the splicer track and said center. Accordingly, the correction motion of the drive provides for an option of repositioning said center between the leading end and the trailing end following the placement of tire component(s) on the tire building drum and the leading end and the trailing end on the support surface of the separator body. The reduction in the deviation between said center between the leading end and the trailing end and the splicer track results in an improvement of the, at least local, quality of the resulting splice or joint, and thus an improved consistency.

Furthermore, since the separator drive comprises a coupling assembly which is configured for providing that the separator body is moveable with at least a second vector component in the correction direction, the coupling assembly of the separator drive allows for the separator body to, at least partially, follow the correcting motion of the working surface. Accordingly, the coupling assembly of the separator drive permits the movement, or repositioning, of the leading and trailing ends to occur with a reduced moving of the separator body with respect to the leading and trailing ends. This substantially reduces or even prevents stresses on the leading and trailing ends that would otherwise be caused by a movement of the leading and trailing ends as provided by the correction motion of the working surface, relative to the separator body. An advantage of this is that said reduction in stresses on the leading and trailing ends prevents unintended deformation of the leading and trailing ends, thus improving the quality of the resulting spliced joint. Furthermore, by configuring the coupling assembly so that the separator body, when coupled to the separator drive, is movable with at least a second component in the correction direction, to at least partially follow the correcting motion of the working surface, a better support of the leading end and the trailing end on the separator body during the splicing process is obtained.

It is noted that the position of the trailing end and/or leading end relative to the splicer path along the splicer direction may be adjusted via the drive not only prior to splicing, but additionally, or alternatively, may also be adjusted during the splicing process.

It is noted that the correction motion is performed when the separator body is connected to the separator drive so that the separator body can be retracted, preferably synchronized, with the advance of the splicer head along the splicer track to splice the leading end to the trailing end.

In an embodiment, the first vector component and the second vector component have the same or substantially the same magnitude. Accordingly, the separator body is movable in the same direction as the correction motion of the working surface so as to be able to follow the correction motion at least to a large extend and preferably to follow the correction motion completely.

In an embodiment, the direction of the correction motion of the drive is parallel or substantially parallel to the correction direction and perpendicular or substantially perpendicular to the splicer track.

In an embodiment, the separator body is connectable to the drive and wherein the coupling assembly of the separator drive provides a movability of the separator body which is configured for moving the separator body together with the working surface. Preferably, a connection between the separator body and the drive is configured so that the separator drive still can move the separator body in the direction parallel or substantially parallel to the splicer track. For example, the connection between the separator body and the drive provides a confinement of the separator body in the direction of the correction motion of the working surface, and provides a freedom to move in a direction transverse to the direction of the correction motion of the working surface. Accordingly, the movement of the separator body with at least a second vector component in the correction direction for at least partially following the correction motion of the working surface, is driven by the drive which generates the correction motion of the working surface, and no additional actuator for moving the separator body with at least a second vector component in the correction direction is required.

In an embodiment, the working surface is a circumferential radial outer surface of the tire building drum, a circumferential radial outer surface of a pre-assembly arranged around the tire building drum, and/or a circumferential radial outer surface of a further tire component arranged around the tire building drum. Preferably, the splicer track extends in a direction that is substantially parallel to the first rotation axis of the tire building drum.

In an embodiment, the coupling assembly comprises a first coupling member coupled to the separator body, wherein the first coupling member is configured to provide a linear or a substantially linear movability of the separator body back and forth in a second direction that is perpendicular or substantially perpendicular to the first rotation axis, and wherein the second direction is substantially perpendicular to the radial line. This embodiment provides for an apparatus that is particularly suitable for splicing the leading end to the trailing end of a tire component which is arranged around the tire building drum during the construction of a tire or part of a tire. By providing the coupling assembly with the possibility of moving the separator body in the second direction, the apparatus is particularly suitable when an amount of rotation around the first axis is relatively small, for example when the deviation between the center between the leading and trailing ends and the splicer track is relatively small in comparison with the diameter of the tire building drum. An advantage of this embodiment is that this provides for a relatively simple construction of the first coupling member. Furthermore, this provides for an possibility of using, for example, one or more linear guiding members to provide said linear movability along the second direction.

The separation position is defined as a position of the separator body wherein the separator body is, at least partially, positioned with respect to the working surface for receiving and/or supporting the leading end and/or the trailing end on the support surface of the separator body, at least when the remainder of the tire component(s) is(are) arranged on the working surface. In particular, the separation position is defined as the position of the separator body without conforming to, or following the correcting motion by the drive.

The radial line is defined as a line that extends radially outwards with respect to the first rotation axis of the tire building drum, wherein said line passes through the circumferential outer surface of the tire building drum, the separator body and/or the support surface.

Preferably, the separator drive is configured to drive the separator body in the direction parallel to the splicer track between the separation position and a withdrawn position, wherein in the withdrawn position the separator body is arranged in axial direction beside the circumferential surface of the tire building drum. The separator body is typically positioned in the withdrawn position during a process of removing the annular tire component from the tire building drum after splicing of the one or more tire components.

In an embodiment, the coupling assembly comprises a first coupling member coupled to the separator body, wherein the first coupling member is configured to provide a movability of the separator body back and forth in a second direction along an arched line or a substantially arched line which is concentric or substantially concentric with the working surface of the tire building drum, wherein the second direction is perpendicular or substantially perpendicular to the radial line. This embodiment is particularly advantageous when the amount of movement of the working surface is relatively large with respect to the curvature of the tire building in order to correct for larger deviations of the leading end and the trailing end, as the separator body is movable in a direction substantially parallel to the working surface of the tire building drum.

In an embodiment, the coupling assembly further comprises a second coupling member for providing a rotation of the separator body about a second rotation axis, wherein the second rotation axis is parallel or substantially parallel to the first rotation axis. In an embodiment, the second rotation axis is spaced apart from the first rotation axis. This embodiment is particularly advantageous in combination with the first coupling member that is configured to provide a substantially linear movability of the separator body back and forth in the second direction as described above. An advantage of this embodiment is, that the rotation of the separator body about the second rotation axis allows the separator body and in particular the support surface to remain substantially parallel, or at least parallel to a line locally tangent, to the working surface when the separator body follows or is conformed to a correcting motion of the working surface due to a rotation of the tire building drum. As a result, the stresses exerted on the leading and trailing ends during the process of correcting for an observed deviation of the leading and trailing ends are reduced.

In an embodiment, the second coupling member is coupled to, and arranged between, the first coupling member and the separator body. In an embodiment, the coupling assembly further comprises a third coupling member coupled to the first coupling member for providing:
a rotation of the separator body about a third rotation axis, wherein the third rotation axis is parallel or substantially parallel to the first rotation axis, and spaced apart from the first rotation axis and the second rotation axis, or
a linear or substantially linear motion of the separator body in a third direction, wherein said third direction is perpendicular or substantially perpendicular to the second direction, and wherein the third direction is parallel or substantially parallel to the radial line of the tire building drum that intersects the separator body in the separation position.

This provides for a mechanical coupling of the separator body via the coupling assembly, wherein the separator body can more accurately follow the correcting motion of the working surface along the correction direction over a larger correcting motion. In particular, the correcting motion is along a circular motion around the first rotation axis of the tire building drum, and the coupling assembly preferably is configured to provide a concentric motion of the separator body to follow this correcting motion. The present embodiment with three coupling members, allows for a motion of the separator body that is substantially concentric with the working surface or the circumferential radial outer surface of the tire building drum. As a result, the separator body can substantially fully follow or conform to the correcting motion of the working surface along the correction direction, thus substantially fully negate stresses that would otherwise be exerted on the leading end and the trailing end by the relative movement of the leading end and the trailing end to the separator body. This provides a higher quality and higher consistency of the resulting splice or joint.

In an embodiment, the separator body is directly coupled to the second coupling member, the second coupling member is directly coupled to the first coupling member and/or the first coupling member is directly coupled to the third coupling member. In other words, the second coupling member is arranged in between the separator body and the first coupling member, and/or the first coupling member is arranged between the second coupling member and the third coupling member.

In an embodiment, the separator drive further comprises a separator drive unit for driving the separator body in the direction parallel or substantially parallel to the splicer track, wherein one or more of the first coupling member, the second coupling member and/or the third coupling member is arranged between the separator body and the separator drive unit.

According to an unclaimed second aspect, the invention provides an apparatus for splicing a leading end of a tire component to a trailing end of the same or another tire component, wherein the apparatus comprises:
a splicer unit with a splicer head that is moveable along a splicer track for splicing the leading end to the trailing end;
a tire building drum comprising a circumferential working surface for supporting the tire component, wherein the working surface is arranged spaced apart from and facing towards the splicer head;
a separator body for separating the leading end and the trailing end from the working surface, wherein the separator body is arranged between or at least substantially between the splicer head and the working surface in a direction extending perpendicularly outwards from the working surface, wherein the separator body comprises a support surface at a side of the separator body facing away from the working surface for supporting the leading end and the trailing end at a distance from the working surface; and
a separator drive for moving the separator body in a direction parallel or substantially parallel to the splicer track,
wherein the splicer unit is configured for generating a correction motion of the splicer head in a correction direction for positioning the splicer track relative to the leading end and the trailing end,
wherein the correction direction extends perpendicular or substantially perpendicular to a radial line of the tire building drum that intersects the separator body in a separation position and the correction direction comprises at least a first vector component perpendicular to the splicer track.

In contrast to the apparatus according to the first aspect, the apparatus according to the second aspect is configured to correct for a deviation between a center between the leading and trailing ends, and the splicer track by moving the splice head in the correction direction in order to reduce said deviation between the center and the splicer track. In effect, the apparatus provides for an option of moving the splicer track relative to the center between the leading and trailing ends, instead of moving the leading and trailing ends with respect to the splicer track. An advantage of this is that by moving the splicer head, the stresses induced on the leading end and/or the trailing end are substantially reduced, or preferably avoided. In particular, stress that may be indirectly induced on the leading and trailing ends by the separator body. Additionally, but not necessarily, this allows for a correction of said center with respect to the splicer track without requiring the separator body, on which the leading end and the trailing end are arranged, to be configured to be moveable in a separator direction that comprises a second vector component in the correction direction perpendicular to the splicer track. In an embodiment, the correction direction is perpendicular or substantially perpendicular to the splicer track.

It is noted that the position of splice track relative to the trailing end and/or leading end may be adjusted not only directly prior to splicing, but additionally, or alternatively, also adjusted during the splicing process.

In an embodiment, the splicer unit comprises splice rollers and a first splicer drive for driving the splice rollers for splicing the leading end and the trailing end together, and at the same time pulling the splicer head along the splicer track, and a second splicer drive for generating the correction motion of the splicer head in the correction direction.

In an embodiment, the tire building drum comprises a drive which is configured for rotating the working surface about a first rotation axis, wherein the working surface is a circumferential radial outer surface of the tire building drum, a circumferential radial outer surface of a pre-assembly arranged on the tire building drum, and/or a circumferential radial outer surface of a further tire component arranged around the tire building drum. The apparatus according to this embodiment is particularly suited for splicing the leading end to the trailing end of a single tire component which is arranged around a tire building drum during the construction of an annular tire part, preferably a part of a green (non-vulcanized) tire.

In an embodiment, the splicer unit, and in particular the second splicer drive, is configured for moving the splicer head in a substantially straight line in the correction direction. An advantage of this embodiment is that this provides for a relatively simple construction. By providing the splicer unit with the possibility of linearly moving the splicer head back and forth in the correction direction, the apparatus is particularly suitable when an amount of movement of the splicer head in the correction direction is relatively small, for example when the deviation between the center between the leading and trailing ends and the splicer track is relatively minor, in particular when the amount of movement of the splicer head in the correction direction is small compared to the curvature of the tire building drum.

In an embodiment, the splicer unit, and in particular the second splicer drive, is configured for moving the splicer head in a substantially arched line which is substantially concentric with the working surface of the tire building drum. An advantage of this embodiment is, that it provides for a correction motion of the splicer head substantially parallel to the curved working surface of the tire building drum, which allows to use this embodiment when the amount of movement of the splicer head in the correction direction may be large compared to the curvature of the tire building drum.

In an embodiment, the splicer unit is configured for providing a rotation of the splicer head about a second rotation axis, wherein the second rotation axis is substantially parallel to the first rotation axis. In an embodiment, the second rotation axis is spaced apart from the first rotation axis. This embodiment is particularly advantageous in combination with the splicer unit, and in particular the second splicer drive, which is configured for moving the splicer head in a substantially straight line in the correction direction as described above.

In an embodiment, the splicer unit is further configured for providing:
a rotation of the splicer head about a third rotation axis, wherein the third rotation axis is parallel or substantially parallel to the first rotation axis, and spaced apart from the first rotation axis and the second rotation axis, or
a linear motion or substantially linear motion of the splicer head in a third direction, wherein said third direction is perpendicular or substantially perpendicular to the splicer track, and wherein the third direction is parallel or substantially parallel to the radial line of the drum that intersects the separator body.

It is noted that the following embodiments may refer to both an embodiment according the first aspect of the invention or an embodiment according the second aspect of the invention.

In an embodiment, the apparatus further comprises a first catcher unit fixedly attached to the tire building drum, wherein the first catcher unit comprises a guide element arranged spaced apart from tire building drum and facing towards the working surface or positioned at least partially radially above the working surface, wherein the guide element is configured for guiding the separator body in a direction parallel or substantially parallel to the splicer track. The first catcher unit provides a means for connecting the separator body to the tire building drum and to the drive, and provides a confinement of the separator body in a direction perpendicular or substantially perpendicular to the splicer track. The guide element allows for an improved accuracy in the positioning of the separator body, in particular this allows the separator body to remain substantially parallel to the splicer track while the separator body is advanced or withdrawn by the separator drive.

In an embodiment, the guide element comprises a plurality of rollers configured for engaging with the separator body for guiding the separator body in a direction parallel or substantially parallel to the splicer track. This provides for a further improved accuracy with respect to retaining a parallel orientation of the separator body with respect to the splicer track. Furthermore, the use of rollers substantially lowers the force that is required to be exerted on the separator body by the separator drive in order to move the separator body in the direction of the splicer track.

In an embodiment, the first catcher unit further comprises a first holding element for engaging with the separator body to releasably hold the separator body in a predetermined position. Preferably, the first holding element is configured for magnetically engaging with the separator body. This embodiment is particularly advantageous in combination with a separator body which is disconnectable or detachable from the separator drive in order to allow the separator body to move along with the tire building drum during a step of positioning the tire component(s) on the tire building drum and the leading end and the trailing end on the separator body. Prior to the splicing of the leading end to the trailing end, the separator body is reconnected to the separator drive in order to move the separator body in the direction parallel or substantially parallel to the splicer track.

In an embodiment, the separator body and the first holding element comprise a pair of magnetically attractive elements. For example, the first holding element and the separator body may each comprises one of a magnetic element such as a magnet or a electromagnet, or a ferromagnetic metal. Preferably, the predefined position is defined by the location of a magnetically attractive element on the separator body.

In an embodiment, the first holding element comprises a first opening configured for receiving the separator body in and/or through said opening. Preferably, the first opening is configured and/or aligned to enable the separator body to enter the first opening when the separator body is moved by the separator drive. This provides for a particularly secure means of holding the separator body to the first holding element. In particular, this ensures parallel arrangement of the separator body with respect to the splicer track, and that movement of the working surface translates through to the separator body via the first catcher unit.

In an embodiment, that may also be applied independently of the coupling assembly and/or the correcting motion, or any other features of the first or second aspect of the invention, where possible, the apparatus further comprises a second catcher unit fixedly attached to the tire building drum, wherein the first and second catcher unit are arranged at opposite sides of the tire building drum in a direction parallel to the splicer track. Accordingly, the combination of the first and second catcher provides a suitable support for the separator body at least for arranging the leading end and the trailing end of the tire component(s) on the support surface of the separator body.

In an embodiment, the second catcher unit comprises a second holding element that, at least in an advanced position, is positioned at least partially radially above the working surface, wherein the second holding element is configured for releasably holding the separator body. This provides for a further means of securely holding the separator body to the working surface via the second catcher unit.

In an embodiment, the second holding element further comprises a second opening configured for receiving the separator body in and/or through said opening. Preferably the second opening is configured and/or aligned to enable the separator body to enter the second opening when the separator body is moved by the separator drive. This provides for a particularly secure means for holding the separator body to the second holding element.

In an embodiment, the second catcher unit is configured to move the second holding element between the advanced position and a withdrawn position in which the second holding element is positioned radially below the working surface.

The second catcher unit is configured to move the second holding member between the advanced position and a withdrawn position, wherein in the advanced position the second holding element is arranged at least partially at a side of the working surface facing away from the first rotation axis, wherein in the withdrawn position the second holding element is arranged at least partially at a side of the working surface facing towards the first rotation axis. As a result, the second holding element in the withdrawn position can be stowed away underneath, or below, or radially inside the working surface when not in use. This provides for an increased freedom of motion of other equipment nearby, for example for equipment to arrange the one or more tire components on the working surface and/or the leading end and the trailing end on the separator body. Furthermore, or similarly, this reduces a chance of accidental collision between the second holding element and any other equipment that may be present nearby. In addition, the arrangement of the second holding element in the withdrawn position allows to move an annular tire part over the position of the second holding element for removing said annular tire part from the tire building drum.

In an embodiment, the first catcher unit is spaced apart from the second catcher unit along a direction parallel or substantially parallel to the first rotation axis, and wherein the working surface is arranged between the first catcher unit and the second catcher unit. Preferably, the first catcher unit is spaced apart from the second catcher unit along the splicer track. This ensures that the separator body is arranged on the working surface in a direction substantially parallel to the splicer track due to the two different points of contact along said splicer track.

In an embodiment, the separator drive further comprises a separator coupling for releasably coupling the separator body to the separator drive. Preferably, the separator coupling is coupled to and arranged at least partially between the separator body and the coupling assembly. The separator coupling allows for the separator body to be either coupled to the separator drive and/or the coupling assembly, in a coupled state, or decoupled from the separator drive and/or the coupling assembly in a decoupled state. Preferably, the separator body is held by the first catcher unit and the second catcher unit when the separator coupling is decoupled. In order to position the trailing end of a tire component on the separator body after the leading end of the tire component has been arranged on the separator body, the tire building drum needs to perform a substantially full turn around the first rotation axis. When the separator body is decoupled from the separator drive and is held by the first and second catcher unit, the separator body can move together with the rotation of the tire building drum, whereas the separator drive and/or the coupling assembly can remain at their position at or near the splicer track. In particular, during a process of arranging the one or more tire components on a tire building drum prior to the splicing process, the decoupled separator body is able to move along with the working surface while the tire building drum is driven in rotation in order to aid with the arrangement of the one or more tire components on the tire building drum. Following the arrangement of the leading end and the trailing end, the separator body is typically again coupled to the separator drive and/or the coupling assembly in order to allow the separator body to be withdrawn by the separator drive during the process of splicing the leading end to the trailing end by the splicer unit.

In an embodiment, the coupling assembly comprises an elongated opening that extends in a direction parallel or substantially parallel to the correction direction and/or concentric or substantially concentric to the working surface, wherein the separator coupling comprises a protrusion, wherein at least a part of the protrusion is arranged in the elongated opening, wherein a width of the protrusion in a longitudinal direction of the elongated opening is smaller than the length of the elongated opening in the longitudinal direction. Accordingly, when the separator coupling couples the separator body to the separator drive, the protrusion of the separator coupling is arranged in the elongated opening of the coupling assembly, and since the width of the protrusion in a longitudinal direction of the elongated opening is smaller than the length of the elongated opening in the longitudinal direction, the separator body is movable relative to the separator coupling in a direction substantially parallel to the correction direction. An advantage of this is that this provides for a particularly cost-efficient and/or mechanically simple coupling assembly, which provides for relatively easy maintenance of the coupling assembly. Preferably, the separator coupling or the separator drive further comprise a decoupling drive configured to drive the separator coupling in rotation about a coupling axis in order to decouple the coupling assembly from the separator coupling by extracting the protrusion from the elongated opening. More preferably wherein the coupling axis is substantially parallel to the first rotation axis.

In an alternative embodiment, the separator body comprises an elongated opening that extends in a direction parallel or substantially parallel to the correction direction and/or concentric or substantially concentric to the working surface, wherein the coupling assembly comprises a protrusion, wherein at least a part of the protrusion is arranged in the elongated opening, wherein a width of the protrusion in a longitudinal direction of the elongated opening is smaller than the length of the elongated opening in the longitudinal direction.

In an embodiment, the coupling assembly comprises a resilient element configured for allowing the separator body to, at least partially, conform to the motion of the working surface effectuated by the drive along the correction direction. In an embodiment, the resilient element comprises rubber or a spring, preferably wherein the spring is a spiral of a leaf-spring. An advantage of this is that the resilient element provides for an especially cost effective coupling assembly due to the relatively simple construction of the coupling assembly.

In an embodiment, the resilient element is configured for urging the separator body back to the separation position.

In an embodiment, that may also be applied independently of the coupling assembly and/or the correcting motion, or any other features of the first or second aspect of the invention, where possible, the separator drive is further configured for moving both the splicer unit and the separator body along a direction parallel or substantially parallel to the splicer track. As a result, this provides an simple way to ensure that the movement of the splicer unit and the separator body are correctly synchronized, and that a substantially constant spacing between the splicer unit and the separator body is provided, especially during the splicing process.

In an embodiment, the apparatus further comprises a detector configured for detecting a position or a series of positions of the leading end and/or the trailing end. The addition of the detector, such as a sensor or a camera to the apparatus allows for the, preferably automatic, detection of the position and/or orientation of the leading end and/or trailing end relative to the splicer track as the leading end and the trailing end are arranged on the separator body. Preferably, the apparatus is provided with a control unit operationally connected to the detector to receive data from the detector, wherein the control unit is configured to determine a position or a series of positions of the trailing end and/or the leading end relative to the splicer track. The position or series of positions of the trailing end and/or the leading end relative to the splicer track allows to determine a deviation between a center position between the leading end and the trailing end and the splicer track along the correction direction. This data can be used to control a correction motion in order to at least reduce a local deviation between a center between the leading end and the trailing end and the splicer track. More preferably, wherein said control unit is operationally connected to the drive, and wherein the control unit is configured for driving the drive based on said deviation in order to reduce said deviation.

In an embodiment, the detector is attached to the splicer unit, preferably wherein the detector is arranged on a side of the splicer unit facing away from the separator drive. An advantage of this is that the leading end and/or the trailing end can be detected by the detector through the motion of the splicer unit as the splicer unit is moved along the splicer track into a start splicing position in preparation of splicing the leading end to the trailing end. This start position is arranged at a side of the tire building drum opposite to the separator drive.

In an embodiment, the splicer unit further comprises a set of splicer wheels configured to be driven in rotation at an adjustable rotation speed for pulling the leading end to the trailing end during splicing of the leading end to the trailing end. Preferably, the rotation speed is adjustable based on a determined offset of the leading end and/or the trailing end. More preferably, wherein said offset is determined by the detector. An advantage of this is that the set of splicer wheels can be used to reduce a detected offset between the leading end and the trailing end. In particular, through the adjustment of the rotation speed of the splicer wheels as a function of a detected local offset between the leading end and the trailing end, wherein higher rotation speeds result in a stronger reduction in the offset between the leading end and the trailing end.

In an embodiment, the splicer unit further comprises a splicer foot coupled to the splicer head, wherein the splicer foot is arranged to support the leading end and the trailing end from a separation space formed by the separator body, and wherein the splicer head is arranged for splicing the leading end and the trailing end on the splicer foot from outside the separation space. An advantage of this is that the splicer foot can support the leading end and the trailing end during the splicing of the leading end to the trailing end. Preferably, the splicer foot is, at least during the splicing of the leading end to the trailing end, at substantially the same distance from the working surface as the support surface of the separator body. Accordingly, the splicer foot can 'take over' the support from the separator body as the separator body is retracted by the separator drive ahead of the splicer unit during the splicing process.

In an embodiment, the apparatus further comprises a control unit that is operationally connected to and configured to control the separator drive and/or the splicer unit simultaneously such that, during the splicing, the separator body is retracted along the splicer track ahead of the splicer head. As a result, the separator body can be retracted ahead of the advancing splicer unit in order to provide a clearance between the separator body and the splicing unit. Preferably, the control unit is configured to keep the clearance between the separator body and splicing unit substantially constant during the process of splicing the leading end to the trailing end. An advantage of this is that a sagging of the tire component at the unsupported clearance between the separator body and the splicing unit can be minimized, or at least kept constant, during the splicing process.

In an embodiment, the separator body is a rigid body, preferably wherein the separator body comprises an elongated bar or an elongated plate. Accordingly, the separator body is particularly suited for securely and/or rigidly supporting the leading end and the trailing end at or near the splicer track.

In an embodiment, the apparatus further comprises a control unit configured for performing a method or an embodiment thereof as described below.

According to a third aspect, the invention provides a method for splicing a leading end of a tire component to a trailing end of the same or another tire component, wherein the method comprises the following steps:
- providing a tire building drum that comprises a circumferential working surface for supporting the tire component(s);
- providing an separator body that comprises a support surface and arranging the separator body at a distance from the tire building drum, wherein the support surface is facing away from the working surface;
- providing and arranging the leading end of the tire component and the trailing end of the same or the other tire component on the support surface;
- providing a splicer unit with a splicer head that is moveable along a splicer track for splicing the leading end to the trailing end;
- determining a deviation between a center between the leading end and the trailing end, and the splicer track along a correction direction, wherein the correction direction is perpendicular to the splicer track and perpendicular to a radial line of the tire building drum that intersects the separator body in a separation position;
- moving the splicer head along the splicer track to splice the leading end to the trailing end; and
- prior and/or during said splicing, rotating the working surface about a first rotation axis and generating a correction motion of the working surface in a circumferential direction about said first rotation axis, wherein the correction motion of the working surface comprises a first vector component in the correction direction, and moving the separator body with a second vector component in the correction direction for at least partially following the correction motion of the working surface, in order to reduce said deviation.

It is noted that during the step of rotating the working surface about the first rotation axis and generating the correction motion of the working surface in the circumferential direction about said first rotation axis, the separator body is connected to the separator drive so that the separator body can be retracted, preferably synchronized, with the advance of the splicer head along the splicer track to splice the leading end to the trailing end.

In an embodiment, the working surface is a circumferential radial outer surface of the tire building drum, a circumferential radial outer surface of a pre-assembly arranged on the tire building drum, and/or a circumferential radial outer surface of a further tire component arranged around the tire building drum.

In an embodiment, the method further comprises the following step, performed before the step of providing and arranging the leading end of the tire component and the trailing end of the same or the other tire component on the support surface:
- moving the separator body from a withdrawn position to an advanced position in a direction parallel or substantially parallel to the splicer track, wherein the separator body in the advanced position at least partially covers the working surface, preferably wherein the separator body in the withdrawn position is arranged in the direction along the splicer track beside the tire building drum.

In an embodiment, that may also be applied that may also be applied independently of the other steps of the aforementioned method and any features mentioned therein, the splicer unit further comprises a set of splicer wheels, wherein the method further comprises the following step:
- rotating the set of splicer wheels during the splicing of the leading end to the trailing end at a rotation speed, wherein the rotation speed is controlled based on a determined offset between the leading end and the trailing end in the correction direction.

The various aspects and features described and shown in the specification can be applied, individually, wherever possible. These individual aspects, in particular the aspects and features described in the attached dependent claims, can be made subject of divisional patent applications.

### BRIEF DESCRIPTION OF THE DRAWINGS

The invention will be elucidated on the basis of an exemplary embodiment shown in the attached drawings, in which:
Figures 1 - 4 show schematic cross-sections in a longitudinal direction of a first example of an apparatus illustrating an exemplary splicing process;
Figure 5 shows a schematic cross-section along plane V - V of figure 4;
Figure 6 shows a schematic top-down view of the apparatus as shown in figure 4, in particular illustrating an exemplary undulating geometry of a trailing end and a leading end of a tire component;
Figures 7A - 7D show a schematic illustration of a cross-section approximately along plane V - V of figure 4, illustrating an exemplary correcting motion in order to reposition the leading end and the trailing end relative to the splicer track in response to a detected deviation of a centre between the leading and trailing ends;
Figure 8A shows a schematic view of an apparatus with a first example of a coupling assembly according to the invention;
Figure 8B and 8C show a schematic cross-section of the apparatus of figure 8A illustrating the working of the coupling assembly of figure 8A;
Figure 9 shows a schematic illustration of a second example of a coupling assembly for an apparatus according to the invention;
Figure 10 shows a schematic illustration of a third example of a coupling assembly for an apparatus according to the invention; and
Figure 11A and 11B show a schematic illustration of an example of a first catcher unit and a second catcher unit, respectively.

### DETAILED DESCRIPTION OF THE INVENTION

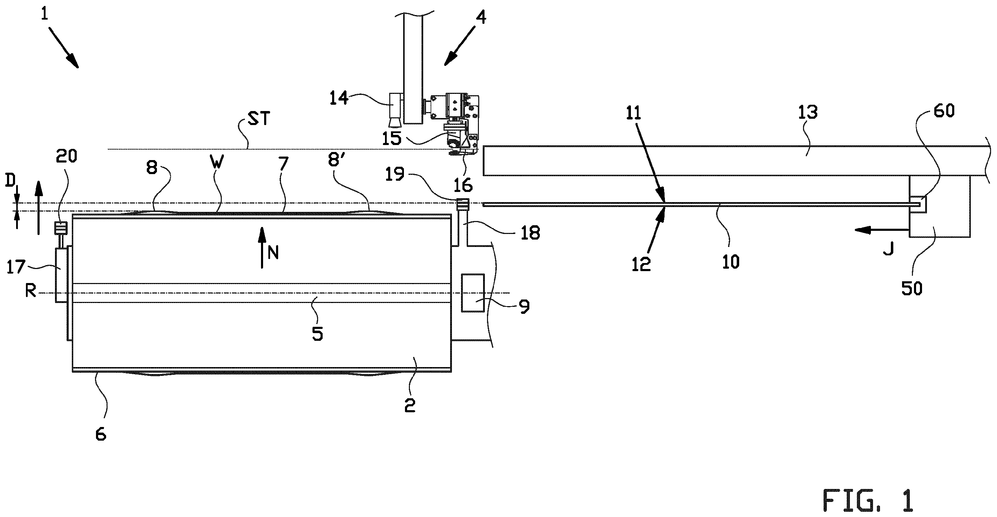

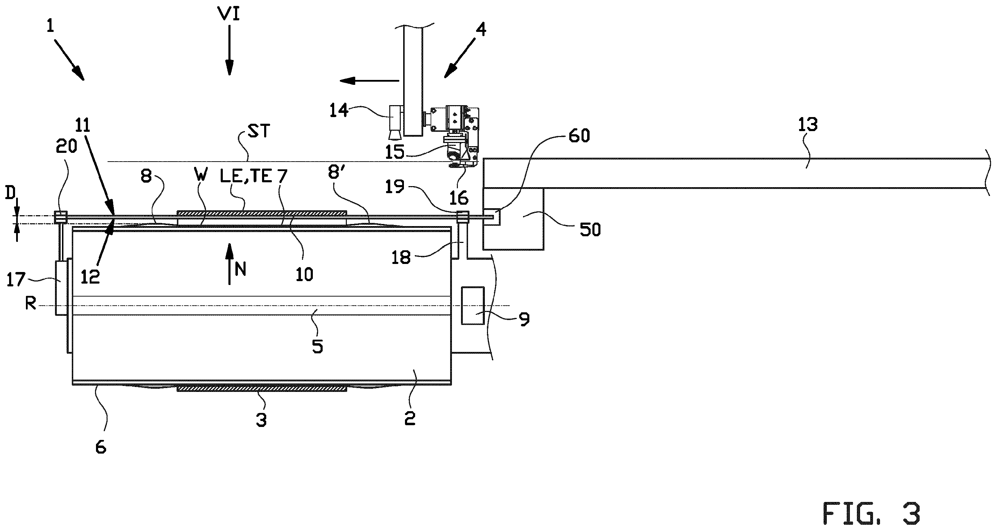

Figures 1 - 4 show a cross-section of a first example of an apparatus 1 according to the invention, wherein the apparatus 1 comprises a tire building drum 2 for receiving one or more tire components 3. The tire building drum 2 comprises a central shaft 5 that defines a rotation axis R about which the tire building drum 2 is rotatable by a drum drive or a carrier drive, hereafter referred to as 'drive' 9, which is well known in the art. The tire building drum 2 further comprises a circumferential surface 6 that extends substantially circumferentially around the rotation axis R, and in this example substantially concentrically to the central shaft 5. The circumferential surface 6 is further shown to extend substantially parallel to the rotation axis R. The circumferential surface 6 is arranged for receiving one or more tire components, for example an inner liner 7 and a body ply 3. In this example, the inner liner 7 has been provided with sidewalls 8, 8' to form a so-called pre-assembly. As best seen in figure 3, the inner liner 7 is typically applied directly on the circumferential surface 6, while the body ply 3 is applied around the inner liner 7. Preferably, the tire components also comprises a steel chafer on top of the pre-assembly, and the body ply 3 is applied on top of said steel chafer. The body ply 3 is shown positioned radially outside the inner liner 7 with respect to the rotation axis R. The one or more tire components are wound around the circumferential surface 6 and have a leading end LE and a trailing end TE. Optionally, one or more further components or layers (not shown) may be applied around or underneath the body ply 3.

The figures 1 - 4 further show that the apparatus 1 further comprises a splicer unit 4 which in turn comprises a splicer head 15 that is movable in along a splicer track ST for joining or splicing the leading end LE of one tire component to the trailing end TE of the same tire component along a butt path or splice path SP. In this example, the splicer track ST extends substantially parallel to the rotation axis R. Furthermore, the splicer track ST extends substantially parallel to the circumferential surface 6. The splicer head 15 comprises splice rollers and a splicer drive for driving the splice rollers for splicing the leading end and the trailing end, and at the same time pulling the splicer unit along a splice path SP. Preferably, the splicer heat 15 comprises splicer foot 16 which is provided with a lifting system to follow surface below the splicer foot 16.

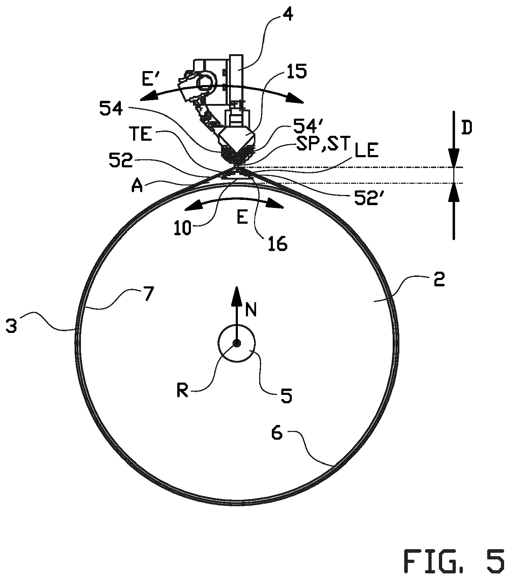

The apparatus 1 further comprises a separator drive 13, which is shown in figure 1 arranged substantially axially beside the tire building drum 2. The separator drive 13 comprises, and is coupled to, a separator body 10 for separating the leading end LE of one tire component and the trailing end TE of the same or the other tire component from a working surface W to form a separation space A as shown in figure 5. The separator drive 13 comprises a separator drive unit for moving or driving the separator body substantially parallel to the splicer track ST. The working surface W is arranged directly below or radially inside with respect to the first rotation axis R of the tire building drum 2 of the leading end LE and the trailing end TE. In this example, the leading end LE and the trailing end TE are both of the same tire component, such as a body ply 3. As the body ply 3 is arranged around the inner liner 7, the pre-assembly, and/or a steel chafer on top of the pre-assembly, the working surface W is formed by an outer surface of the inner liner 7, the pre-assembly, and/or the steel chafer on top of the pre-assembly. Alternatively or additionally, the separator body 10 may be used to separate the leading end LE and the trailing end TE of a further component or layer (not shown) from the body ply 3, in which case the outer surface of the body ply 3 is the working surface W. In a further alternative embodiment, the working surface W may even be the circumferential surface 6 of the tire building drum 2, for example in a case where a tire component is applied directly onto the tire building drum 2. The following description is however based on the exemplary situation in which the leading end LE and the trialing end TE of the body ply 3 are separated from the working surface W formed by the inner liner 7.

As shown in figures 1 - 4, the separator body 10 extends in a direction substantially parallel to the splicer track ST. The separator body 10 in this exemplary embodiment is formed by a rigid bar or strip. As best seen in figure 5, the separator body 10 extends above the working surface W extending in tangential direction on both sides of the splicer track ST. The separator body 10 is provided with a support surface 11 that faces away from the working surface W, and a second surface 12 that faces towards the working surface W. In this example, the separator body 10 has a substantially triangular cross section with the support surface 11 being formed by two sides of the triangular cross section. Each side of the first support surface 11 is arranged for receiving and/or supporting one of the leading end LE and the trailing end TE, respectively.

The leading end LE and the trailing end TE of the body ply 3 are supported by the separator body 10 at a distance from or spaced apart from the working surface W along a radial line RL that extends radially outwards from the first rotation axis through the separator body 10. In particular, the separator body 10 is arranged at a separation distance D above and in a direction N normal to the working surface W, wherein the leading end LE and the trailing end TE are spaced apart from the working surface W over the separation distance D. The separation of the leading end LE and the trailing end TE by the separator body 10 over the separation distance D creates or forms the separation space A between the working surface W and both the leading end LE and the trailing end TE. As a result the leading end LE and the trailing end TE, including an area of the body ply 3 adjacent to said leading end LE and trailing end TE, are separated from the working surface W. The body ply 3 typically comprises uncured rubber that adheres strongly to itself and to the other tire components upon contact. By separating the leading end LE and the trailing end TE from the working surface W prior to the splicing, the position of the leading end LE and the trailing end TE can be manipulated by for example the splicer unit 4 or separator body 10 without the separated leading end LE and the separated trailing end TE prematurely adhering to each other and to the working surface W. The leading end LE and the trailing end TE are normally, or ideally, positioned on the separator body 10 while being slightly spaced apart arranged on opposite sides of the splicer track ST. Thus, the leading end LE and the trailing end TE leave a gap on the separator body 10 prior to the splicing.

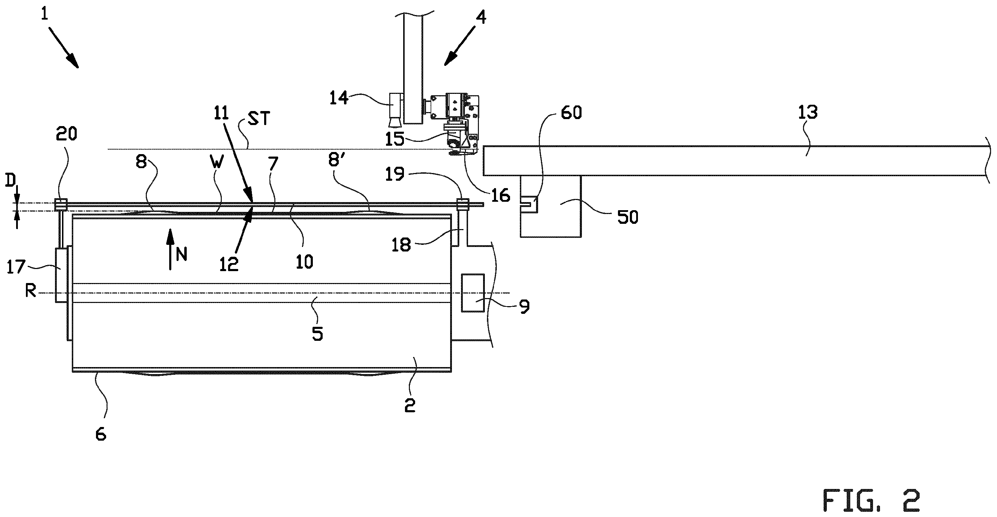

Referring in particularly to figures 1 - 4, the separator drive 13 is configured for moving the separator body 10 along a separator moving direction J substantially parallel to the splicer track ST. The separator body 10 is movable, or advanceable, from a withdrawn position as shown in figure 1 to a separator position or an advanced position as shown in figure 2 by the separator drive 13. The separator body 10 is further movable, or retractable, opposite to the same separation direction J from the separator position to the withdrawn position as shown in figure 1 by the separator drive 13. Preferably, the separator drive 13 drives or translates the separator body 10 linearly.

The figures 1 - 4 further show that the separator drive 13 further comprises a separator coupling 60 for releasably holding the separator body 10 to the separator drive 13. The separator body 10 and the separator coupling 60 are shown in figure 1 in a coupled state, and in figure 2 in a decoupled state. In the decoupled state, the separator body 10 is rotatable around the rotation axis R along with the working surface W of the tire building drum 2 while the separator drive 13 may remain stationary.

The apparatus 1 further comprises a first catcher unit 18 with a first holding element or guide element 19, and a second catcher unit 17 with a second holding element 20. The first and second catcher units 17, 18 are arranged and substantially fixedly attached at axially opposing ends of the tire building drum 2, and are configured for holding and/or guiding the separator body 10. The second catcher unit 17 further comprises a piston configured for moving the second holding element 20 along a direction substantially perpendicular to the first rotation axis R and parallel to a direction normal N to the working surface W. The second catcher unit 17 is configured for moving the second holding element 20 between an advanced position and an withdrawn position. In the withdrawn position, as shown in figure 1, the second holding element 20 is positioned radially below the working surface W. In the advanced position, as shown in figure 2, the second holding element 20 is positioned at least partially radially above the working surface W.

In the context of the present invention, the phrases "radially above the working surface W" and "radially below the working surface W" are to be interpreted as "in a position at a radial distance that is greater than the radius of the working surface W" and "in a position at a radial distance that is smaller than the radius of the working surface W". Hence, the positions are not necessarily limited to a position radially in-line the working surface W. In fact, the holding elements may be positioned alongside the working surface W in the axial direction, while still being relatively above or below the working surface W in the radial direction.

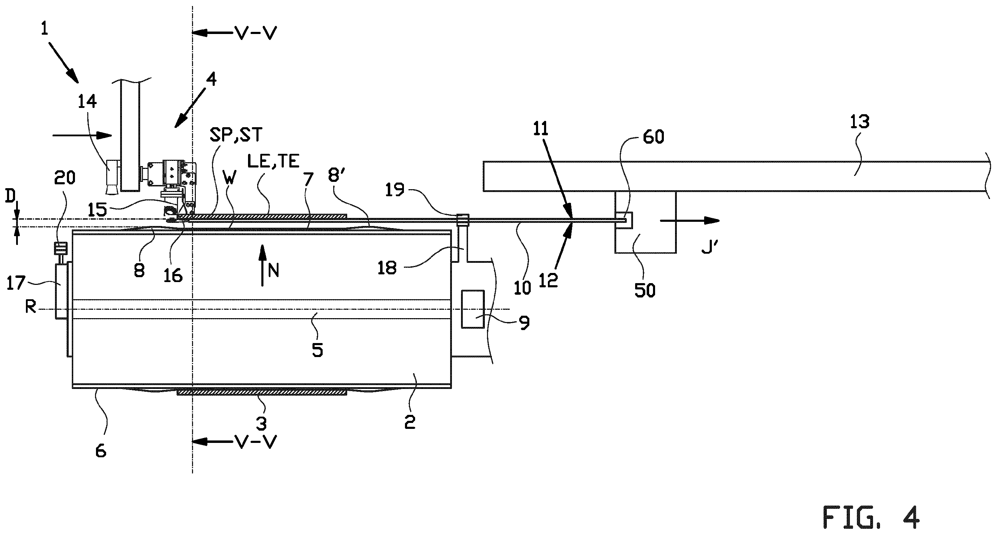

As shown in figure 4, the splicer unit 4 is movable into a support position in which it supports and/or engages the leading end LE and the trailing end TE from within the separation space A that is created by the separator body 10. As shown in detail in figure 5, the splicer unit 4 further comprises a splicer foot 16 that is arranged to be inserted underneath or at the radial inside of the body ply 3 at or near the splicer track ST. In the support position, the splicing foot 16 is opposite to, at substantially the same radial height as and/or aligned with the separator body 10 along the splicer track ST. The splicer foot 16 supports the leading end LE and the trailing end TE at the splice path SP from within the separation space A. The splicer foot 16 is thus arranged for supporting the leading end LE and the trailing end TE from below or at the radial inside of the body ply 3. In this example, the splicer foot 16 comprises a set of lower splicer wheels 52, 52', preferably in the form of beveled or frustoconical gears, for not only supporting the leading end LE and the trailing end TE, but also for forcing said leading end LE and said trailing end TE together towards the splicer track ST. Alternatively, the splicer foot 16 may be formed by a rigid platform that solely supports the leading end LE and the trailing end TE. The splicer foot 16 has a height in the normal direction N that is equal to or in this example smaller than the separation distance D. Thus, the splicer foot 16 can be easily inserted into the separation space A between the working surface W and the splicer track ST, without touching and/or damaging the working surface W. The splicer head 15 is configured for splicing the leading end LE and the trailing end TE, while the leading end LE and the trailing end TE are supported on the splicer foot 16 at the splicer track ST. In particular, the splicer head 15 presses the leading end LE against the trailing end TE at the splicer track ST from above or from the radial outside of the body ply 3. In this example, the splicer head 15 comprises a set of upper splicer wheels 54, 54', preferably in the form of beveled or frustoconical gears. The splicer head 15 comprises a splicer drive for driving at least the upper splicer wheels 54, 54' for splicing the leading end LE and the trailing end TE together, and at the same time pulling the splicer head 15 along a splicer track ST. The splicer unit 4 further comprises a coupling member that couples the splicer foot 16 to the splicer head 15. The coupling member is provided with a narrow portion or a neck portion that fits through the gap between the leading end LE and the trailing end TE to connect the splicer foot 16 radially inside or below the splice path SP to the splicer head 15 radially outside or above the splicer track ST. Preferably, the splicer unit 4 is provided with an adjustment device for adjusting the distance in an adjustment direction between the splicer foot 16 and the splicer head 15, and in particular the distance between the lower splicer wheels 52, 52' and the upper splicer wheels 54, 54'.

As best seen in figures 1 - 4, the apparatus 1 further comprises a detector 14, for example a sensor or camera, for determining a position or a series of positions of the leading end LE and the trailing end TE relative to the splicer track ST when arranged on the first support surface 11 of the separator body 10. In particular, the detector 14 is configured for determining a path followed by an edge of the leading and trailing ends LE, TE relative to the splicer track ST. In the example of figure 1, the detector 14 is arranged on a side of the splicer unit 4 facing away from the splicer head 15, in particular facing away from the separator drive 13. Furthermore, the detector 14 is positioned at the side of the splicer unit 4 that is facing towards the second catcher unit 17. Based on the position or the series of positions of the leading end TE and the trailing end TE, a deviation or a series of deviations between a center between the leading end LE and the trailing end LE and the splicer track ST can be determined, if a deviation is present.

To correct for or reduce said deviation or series of deviations, the center between the leading end TE and the trailing end TE can be moved or repositioned relative to the splicer track ST.

One of the ways the center between the leading end LE and the trailing end TE can be repositioned, or corrected, is by performing a correction motion of the working surface W in a correction direction E via the rotation of the tire building drum 2 about the rotation axis R by the drive 9, as schematically indicated in figure 5. This correction motion may be performed not only before splicing the leading end LE to the trailing end TE, but also during said splicing. Here, the correction direction E comprises at least a first vector component that is perpendicular to the splicer track ST, or preferably wherein the correction direction E is substantially concentric with or tangent to the circumferential outer surface 6 of the tire building drum 2. As shown in figures 1 - 4, to permit the separator body 10 to at least partially move along, conform to or follow the motion of the working surface W in the correction direction E, the separator drive 13 is provided with a coupling assembly 50. In particular, the coupling assembly 50 is configured for moving the separator body 10 back and forth in a separator correction direction G that is substantially parallel to the correction direction E perpendicular to the splicer track ST. The coupling assembly 50 is arranged between and coupled to the separator body 10 and the separator coupling 60. This exemplary embodiment as shown in the figures 1 - 4 illustrates an example wherein the separator body 10, separator coupling 60, the coupling assembly 50 and the separator drive unit are directly coupled and arranged in series. For example, the separator body 10 can be provided with a substantially cylindrical pin at the end facing the coupling assembly 50, and the separator coupling 60 can be a round bellows gripper with a center hole for accommodating the cylindrical pin, wherein the cylindrical pin can be grabbed by the round bellows gripper by pressurizing and/or inflating the bellow of the round bellows gripper.

It is noted that a different relative arrangement of these components is furthermore possible, for example the separator coupling 60 may be arranged between the coupling assembly 50 and the separator drive unit. Or alternatively, the coupling assembly 50 may be arranged between the separator drive unit and a substantially static frame (not shown) for carrying the separator drive 13. As a result of performing one or more correction motions of the working surface during the splicing process, the resulting splice or joint between the leading end LE and the trailing end TE will extend along the splice path SP. Typically, the splicer track ST is a substantially straight line, and as a result of the correction motions, the splice path SP may be a curved line.

An exemplary method of utilizing the first exemplary apparatus 1 for splicing the leading end LE to the trailing end LE will now be elucidated below with particular reference to the figures 1 - 4. The figure 1 illustrates a situation wherein the tire building drum 2 has previously received the inner liner 7 and is ready for receiving the body ply 3 on the tire building drum 2 and the subsequent splicing of the leading end LE to the trailing end TE of the body ply 3. The separator body 10 is shown coupled to the separator coupling 60, and has been positioned by the separator drive 13 in a substantially fully withdrawn position in axial direction next to the tire building drum 2. In the example of figure 1, the separator body 10 does not cover the circumferential surface 6 of the tire building drum 2. The splicer unit 4 is shown in a rest position, arranged near a first end of the tire building drum 2 approximately above the first catcher unit 18. The second catcher unit 17 is shown in a retracted state.

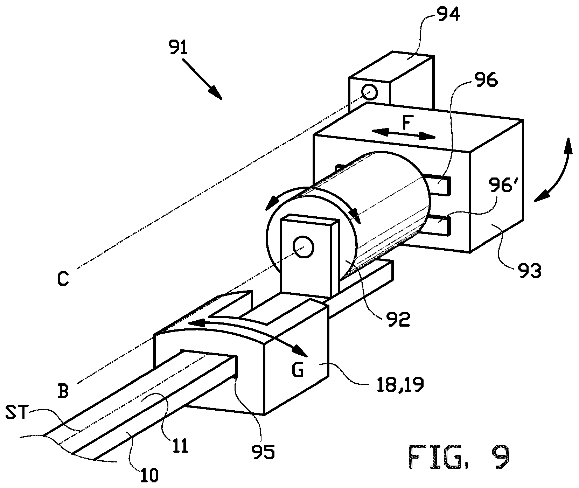

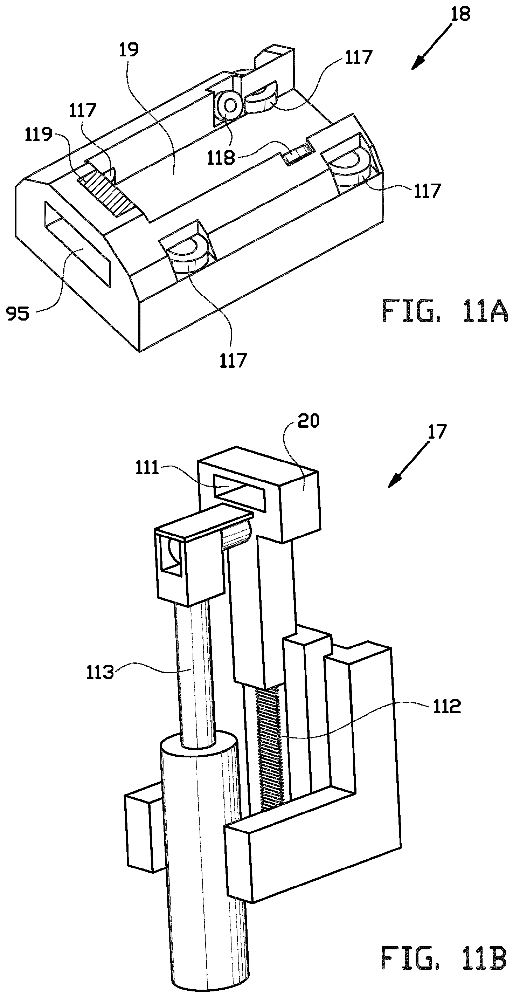

The figure 2 illustrates a situation wherein the separator body 10 has been brough into a substantially fully advanced position in preparation of receiving the leading end LE and the trailing end TE of the body ply 3 as illustrated in figure 3. Returning now to the figure 2, the separator body 10 has been translated by the separator drive 13 in a direction J substantially parallel to the splicer track ST. The separator body 10 is shown passing through an opening 95 (see figures 9, 10 and 11a) of the guide element 19 and an opening 111 (see figure 11B) of the second catcher unit 17. Furthermore, the separator body 10 is held attached to the tire building drum 2 by the guide element 19 and the second catcher unit 17, in order to allow the separator body 10 to rotate along with the tire building drum 2 along the first rotation axis R, when the separator body 10 has been detached or decoupled from the separator drive 13 and/or the coupling assembly 50 by the separator coupling 60. As result, the separator body 10 is able to rotate around the rotation axis R substantially freely with respect to the separator drive 13. The second catcher unit 17 is shown in an extended position, positioned substantially radially above the working surface with respect to the rotation axis R. The first exemplary apparatus 1 of figure 2 is shown in a state in preparation of receiving the leading end LE of the tire component, in particular the body ply 3.

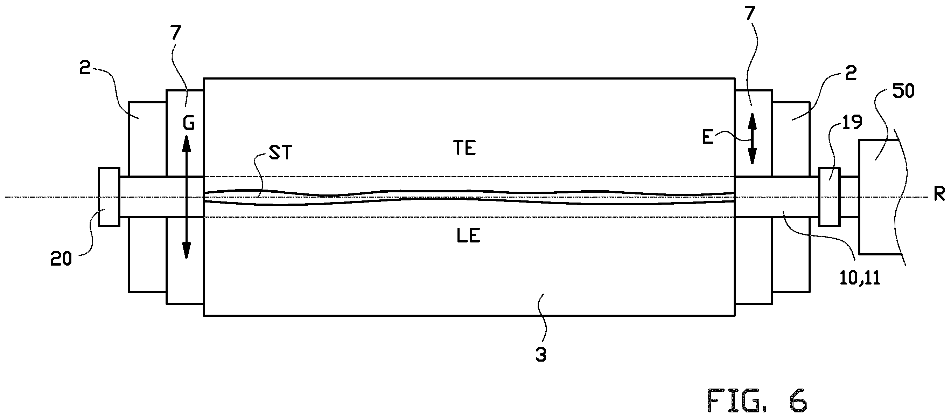

To load a to be spliced tire component around the tire building drum 2, the leading end LE of the body ply 3 is firstly arranged on the support surface 11 of the separator body 10. Following this, a body portion of the body ply 3 is arranged on the working surface W by rotating tire building drum 2, and thus the working surface W, around the rotation axis R. Subsequently, the trailing end TE is arranged on the support surface 11 of the separator body 10, wherein the leading end LE is arranged spaced apart or offset, from the trailing end TE, as schematically shown in figure 6. Figure 3 illustrates a situation following the placement of a body portion of the body ply 3 on the working surface W of the tire building drum 2. Figure 3 furthermore shows that the separator body 10 is again coupled via the separator coupling 60 to the coupling assembly 50 and/or the separator drive 13 following the placement of the to be spliced tire component, in particular the body ply 3.

Following the placement of the leading end LE and the trailing end TE on the support surface 11 of the separator body 10 as shown in figure 3, a geometry and/or positioning of the leading end LE and the trailing end TE may deviate from an optimal situation.

Figure 6 shows a schematic top-down illustration of the first exemplary apparatus 1 as shown in figure 3 along a viewing direction VI. The figure 6 exemplifies a situation wherein the leading end LE and the trailing end TE undulate with respect to the splicer track ST, or in other words wherein a distance between the splicer track ST and a center between the leading end LE and the trailing end TE varies along the length of the splicer track ST. In addition, also the gap between the leading end LE and the trailing end TE may not be constant along the length of the splicer track ST. It is noted that the undulation as shown in figure 6 is strongly exaggerated for illustration reasons. If the positioning of the leading end LE and the trailing end TE is kept unchanged, the process of splicing the leading end LE to the trailing end TE by the splicer unit 4 along the linear splicer track ST, will lead to a splice or joint along the splice path SP with a variable quality or consistency along the length of the joint. In particular, a local spacing and/or position of the splicer head 15, with respect to an portion of the leading end LE and/or the trailing end TE that is being spliced, may vary as the splicer head 15 travels along the splicer track ST. Figure 6 further shows that if during the splicing process, the working surface W is moved back and forth along the correction direction E and the coupling assembly 50 provides a movability of the separator body 10 back and forth along the separator correction direction G, the resulting splice or joint extends along the curved splice path.

As shown in figure 3, the first exemplary apparatus 1 has been provided with the sensor 14 to measure the deviation between the leading end LE and trailing end TE relative to the splicer track ST. The apparatus 1 is configured to detect a position or a series of positions of the leading end LE and the trailing end TE relative to the splicer track ST. Preferably, the apparatus 1 is configured to detect the leading end LE and the trailing end TE as the splicing unit 4 moves from its rest position as shown in figure 1, in a direction parallel to the rotation axis R as shown in figure 3, before beginning the process of splicing the leading end LE to the trailing end TE as shown in figure 4.

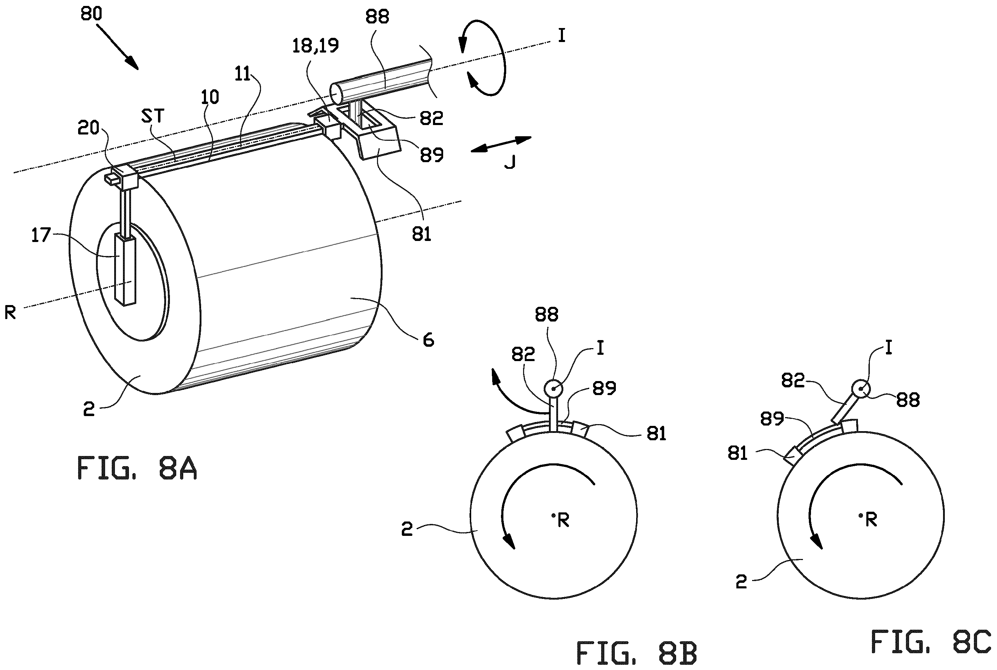

The first exemplary apparatus 1 is configured for, or is provided with a control unit configured for or adapted to, reduce an at least local deviation between the leading end LE and the trailing end TE and the splicer track ST based on data provided to the apparatus 1, or the control unit, by the sensor 14. In particular, the apparatus 1, or the control unit, is configured to move the working surface W in the correction direction E by rotating the tire building drum 2 around the rotation axis R via the drive 9. Preferably, the apparatus 1 or control unit is configured to correct for a determined deviation before, and/or during, the splicing of leading end LE to trailing end TE by the splicer unit 4. As the separator body 10 reaches through the guide element 19 of the first catcher unit 18 which is substantially rigidly connected to the drum 2, the guide element 19 urges the separator body 10 to move along with the working surface in the correction direction E and thus support the leading end LE and the trailing end TE during the correction motion during the splicing process. In order to make it possible that the separator body 10 moves along with the working surface in the correction direction E, the coupling assembly 50 may be provided with an actuator for actively driving the separator body 10 to follow the correction motion of the working surface, or with one or more coupling members which can provide a movement of the separator in a separator correction direction G, as described in more detail below with reference to the figures 8 - 10.

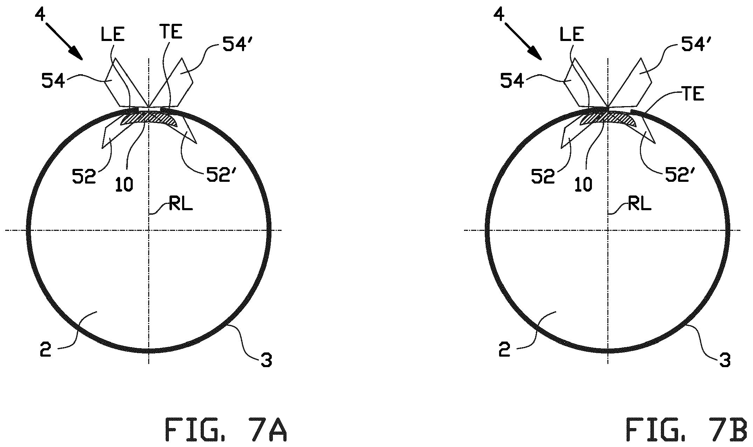

Figures 7A - 7C shows a schematic illustration of a cross-section of the first exemplary apparatus 1 approximately along plane V - V of figure 4, of an exemplary situation and subsequent correction motion that may occur during the splicing process. Figure 7A illustrates a situation wherein the leading end LE and the trailing end TE are positioned on the support surface 11 of the separator body 10 in a substantially optimal position with respect to the splicer track ST. In particular, a center between the leading end LE and the trailing end TE is positioned at the splicer track ST. As a result, splicing the leading end TE to the trailing end TE in this situation will likely lead to an substantially optimal splice or joint result. It is noted that the part of the drawing showing the lower splicer wheels 52, 52' and the upper splicer wheels 54, 54' and the separator body 10 has been enlarged considerably in order to more clearly illustrate the particular situation.

Figure 7B illustrates a situation wherein a center between the leading end LE and the trailing end TE deviates from the splicer track ST. As a result, when the leading end LE and the trailing end TE would be spliced in the present situation a less than optimal splice or joint would be obtained. To avoid or reduce a magnitude of the deviation between the center and the splicer track ST, the detector 14 may be used to detect the position of the leading end LE and the trailing end TE before the start of the splicing process.

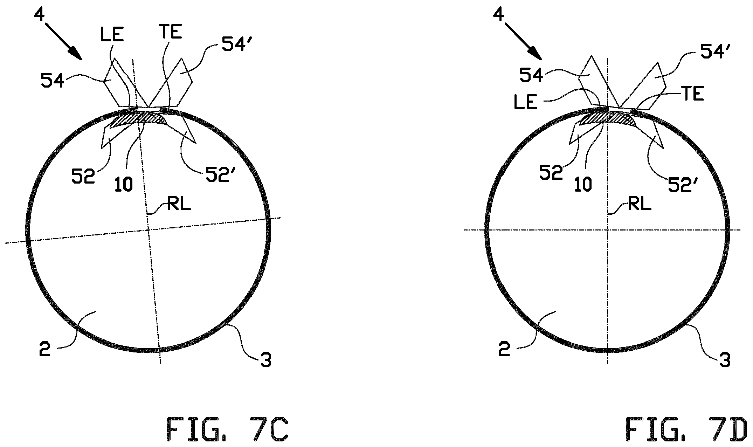

Figure 7C shows a result of the correction motion of the drum 2 and the separator body 10 in response to the observed deviation by the detector 14. In order to adjust for the observed deviation between the current positioning of the leading end LE and the trailing end TE and a more optimal position, the working surface W is moved in the correction direction E via the rotation of the tire building drum 2. Furthermore, the figure 7C shows that in response to the correction motion of the working surface W along the correction direction E, the separator body 10 is moved in the separator correction direction G (shifted to the left in figure 7C) via the coupling of the separator body 10 to the first catcher unit 18. As a result of the correction motion, the center between the leading end LE and the trailing end TE is again positioned at a more optimal position with respect to the splicer wheels, wherein a distance between the center between the leading end LE and the trailing end TE and the splicer tracks ST is reduced or negated.

During typical operation, the working surface W is moved by the drive 9 by rotating the tire building drum 2 along the rotation axis R to correct for the found deviation by less than ± 10 degrees, more preferably less than ± 5 degrees and most preferably less than ± 3 degrees. Furthermore, figure 7A shows the radial line RL extending from the first rotation axis R through the circumferential outer surface 6 of the tire building drum 2 through the separator body 10, and figure 7C shows that this radial line RL has been rotated around the rotation axis R to provide the correction.

Alternatively, in order to reduce a determined deviation between a center between the leading end LE and the trailing end TE and the splicer track ST, the splicer unit 4 may be further configured for generating a correction motion of the splicer head 15 in a correction direction E' for positioning the splicer track ST relative to the leading end LE and the trailing end TE, and wherein the correction direction E' is substantially perpendicular to the splicer track ST, as schematically shown in figure 7D. As a result of the correction motion E', the splicer wheels are positioned at a more optimal position with respect to the center between the leading end LE and the trailing end TE, wherein a distance between the center between the leading end LE and the trailing end TE and the splicer tracks ST is reduced or negated.

Referring again now to figure 4, during the splicing process the separator body 10 is withdrawn in a direction J' substantially parallel to the splicer track ST, while the splicer unit 4 advances in substantially the same direction. It is noted, that the apparatus 1 may further be provided with one or more stitching rollers for stitching the freshly applied and spliced body ply 3 to the pre-assembly previously present on the tire building drum 2.

It is noted that in the example of figures 1 - 5, the splicer unit 4 is also movable in a radial direction of the tire building drum 2 between:
a more distant position from the outer surface 6 of the tire building drum 2 as shown in figures 1 - 3, for moving the splicer unit 4 from one side of the drum 2 to the other side without interfering with the other parts of the tire building drum 2 and/or the tire components arranged on said drum 2, and
a close position to the outer surface 6 of the tire building drum 2 as shown in figures 4 and 5, in order to perform the splicing of the leading and LE and the trailing end TE.

The coupling assembly 50 as described above, may comprise an actuator coupled between the separator coupling 60 and the separator drive unit 13, for actively driving the separator body 10 in the correction direction for following the correction motion of the working surface. However, preferably, the separator body 10 is taken along with a correction movement of the drum 2 by the first catcher unit 18, wherein the coupling assembly 50 comprises one or more coupling members which can provide a movement of the separator in a separator correction direction G, as described in more detail below with reference to the figures 8 - 10.

The figure 8A illustrates a second example of an apparatus according to the invention, wherein the second exemplary apparatus 80 is at least partially similar to the first exemplary apparatus 1 illustrated in figure 1, wherein the same reference numbers denote similar features. The second exemplary apparatus 80 shows an alternative coupling assembly 81 that engages with an alternative separator coupling 88. The separator coupling 88 is coupled to the separator drive 13 (not shown), wherein the separator coupling 88 is configured to be driven in rotation around a coupling axis I. The coupling axis I is shown to be substantially parallel to the rotation axis R of the tire building drum 2 and offset along a direction perpendicular to said rotation axis R. The separator coupling 88 comprises a protrusion 82, or pin, that extends perpendicularly outwards with respect to the coupling axis I, and/or a longitudinal axis of the separator coupling 88.

The figure 8A further shows that the coupling assembly 81 is coupled to the separator body 10. The separator body 10 is shown to pass through the second holding element 20 and the guide element 19, and held to the tire building drum 2. The second coupling assembly 81 comprises an elongated opening 89. The protrusion 82 is shown engaging with the second coupling assembly 81 by passing through the elongated opening 89. The elongated opening 89 comprises a width in a direction substantially axial to the rotation axis R and/or the coupling axis I, wherein said width is preferably approximately equal to, preferably a little larger than, the thickness of the protrusion 82, in order to allow the protrusion 82 to be easily moved in and out of said elongated opening 89. The elongated opening 89 further extends along a direction substantially tangential or concentric to the circumferential surface 6 to permit the second coupling assembly 81 to move with respect to the first protrusion 82 so that the separator body 10 and the coupling assembly 81 are movable with respect to the protrusion 82, to permit the separator body 10 to conform to, or follow, the motion of the working surface W effectuated by the drive 9 along the correction direction E. The separator coupling 88 and/or the coupling assembly 81 are furthermore configured to decouple the separator coupling 88 from the coupling assembly 81 when the separator coupling 88 is sufficiently rotated about the coupling axis I. Preferably, said rotation is significantly greater than the amount of movement typically exerted by the correction movement of the tire building drum 2 and the separator body 10.

Figures 8B and 8C illustrate two different embodiments of the exemplary coupling assembly 81 and separator coupling 88 of figure 8A.

In the first embodiment shown schematically in figure 8B, the separator coupling 88 is actively driven for rotating the protrusion 82 around the coupling axis I for moving the protrusion 82 in and out of the elongated opening 89 of the coupling assembly 81. Preferably, the separator coupling 88 and/or the separator drive 13 comprises an actuator for driving the rotation of the separator coupling 88 around the coupling axis I.

In the second embodiment shown schematically in figure 8C, the separator coupling 88 is configured to release automatically when the drum 2 is rotated further than the amount of rotation which would normally happen during the correcting motion E along the first direction E. In particular, the coupling assembly 81 and/or the separator coupling 88 does not feature a drive configured for rotating the separator coupling 88 about the coupling axis I. The separator coupling 88 is rotatably coupled to the separator drive 13, and the protrusion 82 is pushed aside and out of the elongated opening 89 by an end of the coupling assembly 81, when the drum 2 rotates further than a predetermined amount, which is larger than the maximum amount of rotation used for the correcting motion.

Figure 9 illustrates a second example of a coupling assembly 91 for use in an apparatus according to the invention. The figure 9 shows the separator body 10 passing through the opening 95 of the guide element 19. The first catcher unit 18 and the guide element 19 are attached to the tire building drum 2 (as shown in figure 1). Figure 9 furthermore illustrates an exemplary motion of the separator body 10 and the first catcher unit 18 along the separator correction direction G.

In this example the separator correction direction G is a direction substantially concentric with the working surface W of a tire building drum. The figure further shows that the coupling assembly 91 comprises a first coupling member 92 rotatably connected to the separator body 10. The first coupling member 92 is configured to rotate around a first coupling member rotation axis B, wherein the first coupling member rotation axis B is parallel to the rotation axis R of the tire building drum (not shown) and wherein the first coupling member rotation axis B is offset from the rotation axis R of the tire building drum. The coupling assembly 91 according to this second example further comprises a second coupling member 93 coupled to the first coupling member 92 to permit the separator body 10 to move relative to the second coupling member 93 along a translation direction F that is substantially perpendicular to the first coupling member rotation axis B. In this example, the second coupling member 93 comprises a set of linear rails 96, 96' in order to provide linear motion in the translation direction F. The translation direction F is substantially parallel to a tangential direction of the outer surface of the tire building drum at or near the first catcher unit 18, and/or substantially perpendicular to the radial line RL of the tire building drum that traverses the first catcher unit 18 and/or the separator body 10, and/or perpendicular to a normal vector of the circumferential outer surface 6 of the tire building drum 2 at the separator body 10. The coupling assembly 91 further comprises a third coupling member 94 coupled to the second coupling member 93 to permit rotation of second coupling member 93 relative to the third coupling member 94 around a third coupling member rotation axis C. The third coupling member rotation axis C is substantially parallel to the first coupling member rotation axis B, and is offset with respect to the first coupling member rotation axis B at least in a direction perpendicular to the rotation axis R of the tire building drum. Furthermore, the second coupling member 93 is arranged between the first coupling member 92 and the third coupling member 94. The third coupling member 94 is typically coupled to the separator drive 13. It is noted that, the separator coupling 60 may be arranged for example between the first coupling member 92 and the separator body 10 or between the third coupling member 94 and the separator drive 13. Figure 9 furthermore exemplifies an alternative separator body 10 shape with a substantially rectangular shape. In the present example, the first, second and third coupling members 91, 92, 93 are directly connected in series.

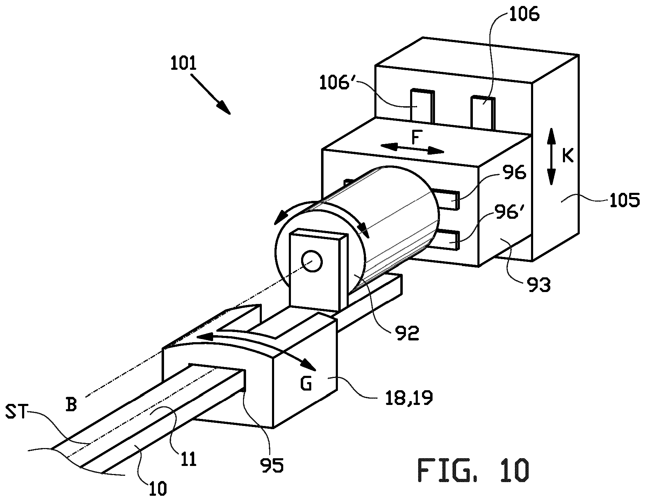

Figure 10 illustrates third example of a coupling assembly 101 that is substantially similar to the second example of the coupling assembly 91 of the figure 9. A difference between the coupling assembly 101 of figure 10 in view of the coupling assembly 91 of figure 9, is that the third coupling member 105 of the third exemplary coupling assembly 101 of the figure 10 is configured to allow a translation motion instead of a rotation motion as illustrated in figure 9. In particular, the third coupling member 105 is configured to permit the second coupling member 93 to move relative to the third coupling member 105 in a third direction K substantially perpendicular to the first coupling member rotation axis B and the translation direction F. The third coupling member 93 comprises a set of linear rails 106, 106' in order to provide a linear motion in the third direction K. It is noted that, alternatively, the second and third coupling members 93, 105 may be configured as a single unit to provide motion along a plane perpendicular to the first coupling member rotation axis B.

Figure 11A and figure 11B show a more detailed view of examples of the guide element 19 of the first catcher unit 18 and the second catcher unit 17.

As shown in figure 11A, the example of the guide element 19 of the first catcher unit 18 comprises a first opening 95 configured for allowing the separator body 10 to pass through said first opening 95. The guide element 19 is furthermore provided with a plurality of rollers 117, 118 in order to guide the separator body 10 along the separator direction J parallel to the splicer track SP, preferably in a substantially linear motion.

As schematically shown in figure 11A, the first catcher unit 18 comprises a magnetic attractive element 119 which is arranged at a side of the first catcher unit 18 facing the guide element 19. The magnetic attractive element 119 is configured to cooperate with a further magnetic attractive element on the separator body to releasably hold the separator body 10 in a predetermined position with respect to the first catcher unit 18.

As shown in figure 11B, the second catcher unit 17 comprises a second holding element 20 with a second opening 111 configured for allowing the separator body 10 to pass through said second opening 111. The second catcher unit 17 is shown to further comprises a rail 112 and a piston 113 for allowing the second catcher unit 17 to move the second holding element 20, preferably for moving the holding element with a linear motion which, when used in a tire building drum, is arranged in a radial direction of the tire building drum for moving the second holding element 20 between an advanced position and an withdrawn position. In the withdrawn position, as shown in figure 1, the second holding element 20 is positioned radially below the working surface W. Figure 11B shows the second holding element 20 in the advanced position, wherein the second holding element 20 is positioned at least partially radially above the working surface W, as schematically indicated in figure 2.

It is to be understood that the above description is included to illustrate the operation of the preferred embodiments and is not meant to limit the scope of the invention. From the above discussion, many variations will be apparent to one skilled in the art that would yet be encompassed by the scope of the present invention.

## Claims

1. An apparatus for splicing a leading end of a tire component to a trailing end of the same or another tire component, wherein the apparatus comprises:
a splicer unit with a splicer head that is moveable along a splicer track for splicing the leading end to the trailing end;
a tire building drum comprising a circumferential working surface for supporting the tire component, wherein the working surface is arranged spaced apart from and facing towards the splicer head, and wherein the tire building drum comprises a drive for rotating the working surface about a first rotation axis and for generating a correction motion of the working surface in a circumferential direction about said first rotation axis,;
a separator body for separating the leading end and the trailing end from the working surface, wherein the separator body is arranged between or at least substantially between the splicer head and the working surface when considered in a direction extending perpendicularly outwards from the working surface, wherein the separator body comprises a support surface at a side of the separator body facing away from the working surface for supporting the leading end and the trailing end at a distance from the working surface, wherein the correction direction extends perpendicular to a radial line of the tire building drum that intersects the separator body in a separation position; and
a separator drive for moving the separator body in a direction parallel or substantially parallel to the splicer track,
wherein the correction motion of the working surface comprises a first vector component in a correction direction perpendicular to the splicer track for positioning the leading end and the trailing end relative to the splicer track after placement of tire component on the tire building drum and the leading end and the trailing end on the support surface of the separator body;
wherein the separator drive comprises a coupling assembly which is configured for providing that the separator body is movable with a second vector component in the correction direction for at least partially following the correction motion of the working surface.

2. The apparatus according to claim 1, wherein the drive is configured for rotating the working surface relative to the splicer track about the first rotation axis and/or for generating the correction motion of the working surface relative to the splicer track in the circumferential direction about said first rotation axis.

3. The apparatus according to claim 1 or 2, wherein the first vector component and the second vector component have the same or substantially the same magnitude.

4. The apparatus according to any one of the preceding claims, wherein the direction of the correction motion of the drive is parallel or substantially parallel to the correction direction and perpendicular or substantially perpendicular to the splicer track.

5. The apparatus according to any one of the preceding claims, wherein the separator body is connectable to the drive and wherein the coupling assembly of the separator drive provides a movability of the separator body which is configured for moving the separator body together with the working surface.

6. The apparatus according to any one of the preceding claims, wherein the coupling assembly comprises a first coupling member coupled to the separator body, wherein the first coupling member is configured to provide a linear or substantially linear movability of the separator body back and forth in a second direction that is perpendicular or substantially perpendicular to the first rotation axis, and wherein the second direction is substantially perpendicular to the radial line.

7. The apparatus according to any one of the preceding claims, wherein the coupling assembly comprises a first coupling member coupled to the separator body, wherein the first coupling member is configured to provide a movability of the separator body back and forth in a second direction along an arched line or a substantially arched line which is concentric or substantially concentric with the working surface of the tire building drum, wherein the second direction is perpendicular or substantially perpendicular to the radial line.

8. The apparatus according to claim 6 or 7, wherein the coupling assembly further comprises a second coupling member for providing a rotation of the separator body about a second rotation axis, wherein the second rotation axis is spaced apart and parallel or substantially parallel to the first rotation axis;
preferably wherein the second coupling member is coupled to, and arranged between, the first coupling member and the separator body, wherein the coupling assembly further comprises a third coupling member coupled to the first coupling member for providing:
a rotation of the separator body about a third rotation axis, wherein the third rotation axis is parallel or substantially parallel to the first rotation axis, and spaced apart from the first rotation axis and the second rotation axis, or
a linear or substantially linear motion of the separator body in a third direction, wherein said third direction is perpendicular or substantially perpendicular to the second direction, and wherein the third direction is parallel or substantially parallel to the radial line of the tire building drum that intersects the separator body in the separation position;
more preferably wherein the separator body is directly coupled to the second coupling member, the second coupling member is directly coupled to the first coupling member and/or the first coupling member is directly coupled to the third coupling member.

9. The apparatus according to any one of the claims 6-8, wherein the separator drive further comprises a separator drive unit for driving the separator body in the direction parallel or substantially parallel to the splicer track, wherein one or more of the first coupling member, the second coupling member and/or the third coupling member is arranged between the separator body and the separator drive unit.

10. The apparatus according to any one of the preceding claims, wherein the apparatus further comprises a first catcher unit fixedly attached to the tire building drum, wherein the first catcher unit comprises a guide element arranged spaced apart from the tire building drum and facing towards the working surface, wherein the guide element is configured for guiding the separator body in a direction parallel or substantially parallel to the splicer track, preferably wherein the guide element comprises a plurality of rollers configured for engaging with the separator body for guiding the separator body in a direction parallel or substantially parallel to the splicer track.

11. The apparatus according to claim 10, wherein the first catcher unit further comprises a first holding element for engaging with the separator body to releasably hold the separator body in a predetermined position;
preferably wherein the separator body and the first holding element comprise a pair of magnetically attractive elements; and/or
wherein the first holding element comprises a first opening configured for receiving the separator body through said opening, preferably wherein the first opening is configured and/or aligned to enable the separator body to enter the first opening when the separator body is moved by the separator drive.

12. The apparatus according to claim 10 or 11, wherein the apparatus further comprises a second catcher unit fixedly attached to the tire building drum, wherein the first and second catcher unit are arranged at opposite sides of the tire building drum in a direction parallel to the splicer track.

13. The apparatus according to claim 12, wherein the second catcher unit comprises a second holding element that, at least in an advanced position, is positioned at least partially radially above the working surface, wherein the second holding element is configured for releasably holding the separator body;
preferably wherein the second holding element further comprises a second opening configured for receiving the separator body through said opening, preferably wherein the second opening is configured and/or aligned to enable the separator body to enter the second opening when the separator body is moved by the separator drive; and/or
wherein the second catcher unit is configured to move the second holding element between the advanced position and a withdrawn position in which the second holding element is positioned radially below the working surface.

14. The apparatus according to any one of the preceding claims, wherein the separator drive further comprises a separator coupling for releasably coupling the separator body to the separator drive, preferably wherein the separator coupling is coupled to and arranged at least partially between the separator body and the coupling assembly.

15. The apparatus according to any one of the preceding claims, wherein the coupling assembly comprises an elongated opening that extends in a direction parallel or substantially parallel to the correction direction and/or concentric or substantially concentric to the working surface, wherein the separator coupling comprises a protrusion, wherein at least a part of the protrusion is arranged in the elongated opening, wherein a width of the protrusion in a longitudinal direction of the elongated opening is smaller than the length of the elongated opening in the longitudinal direction.

16. The apparatus according to any one of the preceding claims, wherein the separator body comprises an elongated opening that extends in a direction parallel or substantially parallel to the correction direction and/or concentric or substantially concentric to the working surface, wherein the coupling assembly comprises a protrusion, wherein at least a part of the protrusion is arranged in the elongated opening, wherein a width of the protrusion in a longitudinal direction of the elongated opening is smaller than the length of the elongated opening in the longitudinal direction.

17. The apparatus according to any one of the preceding claims, wherein the coupling assembly comprises a resilient element configured for allowing the separator body to, at least partially, conform to the motion of the working surface effectuated by the drive along the correction direction, preferably wherein the resilient element comprises rubber or a spring, preferably wherein the spring is a spiral of a leaf-spring.

18. The apparatus according to any one of the preceding claims, wherein the separator drive is configured for moving both the splicer unit and the separator body along a direction parallel or substantially parallel to the splicer track.

19. The apparatus according to any one of the preceding claims, wherein the apparatus further comprises a detector configured for detecting a position or a series of positions of the leading end and/or the trailing end, preferably wherein the apparatus is provided with a control unit operationally connected to the detector to receive data from the detector, wherein the control unit is configured to determine a position or a series of positions of the trailing end and/or the leading end relative to the splicer track;
preferably wherein the detector is attached to the splicer unit, preferably wherein the detector is arranged on a side of the splicer unit facing away from the separator drive; and/or
wherein the splicer unit further comprises a set of splicer wheels configured to be driven in rotation at an adjustable rotation speed for pulling the leading end to the trailing end during splicing of the leading end to the trailing end, wherein the rotation speed is adjustable based on a determined offset of the leading end and/or the trailing end, wherein said offset is determined by the detector.

20. The apparatus according to any one of the preceding claims, wherein the separator body is a rigid body, preferably wherein the separator body comprises an elongated bar or an elongated plate.

21. A method for splicing a leading end of a tire component to a trailing end of the same or another tire component, wherein the method comprises the following steps:
- providing a tire building drum that comprises a circumferential working surface for supporting the tire component(s);
- providing an separator body that comprises a support surface and arranging the separator body at a distance from the tire building drum, wherein the support surface is facing away from the working surface;
- providing and arranging the leading end of the tire component and the trailing end of the same or the other tire component on the support surface;
- providing a splicer unit with a splicer head that is moveable along a splicer track for splicing the leading end to the trailing end;
- determining a deviation between a center between the leading end and the trailing end, and the splicer track along a correction direction, wherein the correction direction is perpendicular to the splicer track and perpendicular to a radial line of the tire building drum that intersects the separator body in a separation position;
- moving the splicer head along the splicer track to splice the leading end to the trailing end; and
- prior and/or during said splicing, rotating the working surface about a first rotation axis and generating a correction motion of the working surface in a circumferential direction about said first rotation axis, wherein the correction motion of the working surface comprises a first vector component in the correction direction, and moving the separator body with a second vector component in the correction direction for at least partially following the correction motion of the working surface, in order to reduce said deviation.

22. The method according to claim 21, wherein the method further comprises the following step, performed before the step of providing and arranging the leading end of the tire component and the trailing end of the same or the other tire component on the support surface:
- moving the separator body from a withdrawn position to an advanced position in a direction parallel or substantially parallel to the splicer track, wherein the separator body in the advanced position at least partially covers the working surface, preferably wherein the separator body in the withdrawn position is arranged in the direction along the splicer track beside the tire building drum; and/or
wherein the splicer unit further comprises a set of splicer wheels, wherein the method further comprises the following step:
- rotating the set of splicer wheels during the splicing of the leading end to the trailing end at a rotation speed, wherein the rotation speed is controlled based on a determined offset between the leading end and the trailing end in the correction direction.

## Patentansprüche

1. Vorrichtung zum Spleißen eines Vorderendes eines Reifenbestandteils mit einem Hinterende desselben oder einem anderen Reifenbestandteil, wobei die Vorrichtung Folgendes umfasst:
eine Spleißeinheit mit einem Spleißkopf, der entlang einer Spleißbahn bewegbar ist, um das Vorderende mit dem Hinterende zu spleißen;
eine Reifenaufbautrommel, die eine umlaufenden Arbeitsfläche zum Abstützen des Reifenbestandteils umfasst, wobei die Arbeitsfläche mit einem Abstand zum Spleißkopf und diesem zugewandt angeordnet ist und wobei die Reifenaufbautrommel einen Antrieb zum Drehen der Arbeitsfläche um eine erste Drehachse und zum Erzeugen einer Korrekturbewegung der Arbeitsfläche in einer Umfangsrichtung um die erste Drehachse umfasst;
einen Trennkörper zum Trennen des Vorderendes und des Hinterendes von der Arbeitsfläche, wobei der Trennkörper, betrachtet in einer sich senkrecht von der Arbeitsfläche nach außen erstreckenden Richtung, zwischen oder zumindest im Wesentlichen zwischen dem Spleißkopf und der Arbeitsfläche angeordnet ist, wobei der Trennkörper an einer von der Arbeitsfläche abgewandten Seite des Trennkörpers eine Auflagefläche zum Abstützen des Vorderendes und des Hinterendes in einem Abstand von der Arbeitsfläche umfasst, wobei die Korrekturrichtung senkrecht zu einer radialen Linie der Reifenaufbautrommel verläuft, die den Trennkörper in einer Trennposition schneidet; und
einen Trennantrieb zum Bewegen des Trennkörpers in einer Richtung parallel oder im Wesentlichen parallel zur Spleißbahn,
wobei die Korrekturbewegung der Arbeitsfläche eine erste Vektorkomponente in einer zur Spleißbahn senkrechten Korrekturrichtung zum Positionieren des Vorderendes und des Hinterendes relativ zur Spleißbahn nach dem Platzieren des Reifenbestandteils auf der Reifenaufbautrommel und des Vorderendes und des Hinterendes auf der Auflagefläche des Trennkörpers umfasst;
wobei der Trennantrieb eine Kopplungsanordnung umfasst, die dafür eingerichtet ist, vorzusehen, dass der Trennkörper mit einer zweiten Vektorkomponente in der Korrekturrichtung bewegbar ist, um der Korrekturbewegung der Arbeitsfläche zumindest teilweise zu folgen.

2. Vorrichtung nach Anspruch 1, wobei der Antrieb dazu eingerichtet ist, die Arbeitsfläche relativ zur Spleißbahn um die erste Drehachse zu drehen und/oder die Korrekturbewegung der Arbeitsfläche relativ zur Spleißbahn in der Umfangsrichtung um die erste Drehachse zu erzeugen.

3. Vorrichtung nach Anspruch 1 oder 2, wobei die erste Vektorkomponente und die zweite Vektorkomponente den gleichen oder im Wesentlichen den gleichen Betrag aufweisen.

4. Vorrichtung nach einem der vorhergehenden Ansprüche, wobei die Richtung der Korrekturbewegung des Antriebs parallel oder im Wesentlichen parallel zur Korrekturrichtung und senkrecht oder im Wesentlichen senkrecht zur Spleißbahn ist.

5. Vorrichtung nach einem der vorhergehenden Ansprüche, wobei der Trennkörper mit dem Antrieb verbunden werden kann und wobei die Kopplungsanordnung des Trennantriebs dem Trennkörper eine Beweglichkeit verleiht, die dazu ausgelegt ist, den Trennkörper zusammen mit der Arbeitsfläche zu bewegen.

6. Vorrichtung nach einem der vorhergehenden Ansprüche, wobei die Kopplungsanordnung ein erstes Kopplungselement umfasst, das mit dem Trennkörper gekoppelt ist, wobei das erste Kopplungselement dazu eingerichtet ist, dem Trennkörper eine lineare oder im Wesentlichen lineare Beweglichkeit rückwärts und vorwärts in einer zweiten Richtung zu verleihen, die senkrecht oder im Wesentlichen senkrecht zur ersten Drehachse ist, und wobei die zweite Richtung im Wesentlichen senkrecht zu der radialen Linie ist.

7. Vorrichtung nach einem der vorhergehenden Ansprüche, wobei die Kopplungsanordnung ein erstes Kopplungselement umfasst, das mit dem Trennkörper gekoppelt ist, wobei das erste Kopplungselement dazu eingerichtet ist, dem Trennkörper eine Beweglichkeit rückwärts und vorwärts in einer zweiten Richtung entlang einer bogenförmigen oder im Wesentlichen bogenförmigen Linie zu verleihen, die konzentrisch oder im Wesentlichen konzentrisch zur Arbeitsfläche der Reifenaufbautrommel ist, wobei die zweite Richtung senkrecht oder im Wesentlichen senkrecht zu der radialen Linie ist.

8. Vorrichtung nach Anspruch 6 oder 7, wobei die Kopplungsanordnung ferner ein zweites Kopplungselement umfasst, um eine Drehung des Trennkörpers um eine zweite Drehachse vorzusehen, wobei die zweite Drehachse von der ersten Drehachse beabstandet und parallel oder im Wesentlichen parallel zu ihr ist;
vorzugsweise wobei das zweite Kopplungselement mit dem ersten Kopplungselement und dem Trennkörper gekoppelt und zwischen ihnen angeordnet ist, wobei die Kopplungsanordnung ferner ein drittes Kopplungselement umfasst, das mit dem ersten Kopplungselement gekoppelt ist, um Folgendes vorzusehen:
eine Drehung des Trennkörpers um eine dritte Drehachse, wobei die dritte Drehachse parallel oder im Wesentlichen parallel zur ersten Drehachse und von der ersten Drehachse und der zweiten Drehachse beabstandet ist, oder
eine lineare oder im Wesentlichen lineare Bewegung des Trennkörpers in einer dritten Richtung, wobei die dritte Richtung senkrecht oder im Wesentlichen senkrecht zur zweiten Richtung ist, und wobei die dritte Richtung parallel oder im Wesentlichen parallel zu der radialen Linie der Reifenaufbautrommel ist, die den Trennkörper in der Trennposition schneidet;
noch bevorzugter wobei der Trennkörper direkt mit dem zweiten Kopplungselement gekoppelt ist, das zweite Kopplungselement direkt mit dem ersten Kopplungselement gekoppelt ist und/oder das erste Kopplungselement direkt mit dem dritten Kopplungselement gekoppelt ist.

9. Vorrichtung nach einem der Ansprüche 6 bis 8, wobei der Trennantrieb ferner eine Trennantriebseinheit zum Antreiben des Trennkörpers in der zur Spleißbahn parallelen oder im Wesentlichen parallelen Richtung umfasst, wobei eines oder mehrere von dem ersten Kopplungselement, dem zweiten Kopplungselement und/oder dem dritten Kopplungselement zwischen dem Trennkörper und der Trennantriebseinheit angeordnet sind.

10. Vorrichtung nach einem der vorhergehenden Ansprüche, wobei die Vorrichtung ferner eine erste Fangeinheit umfasst, die fest an der Reifenaufbautrommel angebracht ist, wobei die erste Fangeinheit ein Führungselement umfasst, das in einem Abstand zur Reifenaufbautrommel und der Arbeitsfläche zugewandt angeordnet ist, wobei das Führungselement dazu gestaltet ist, den Trennkörper in einer zur Spleißbahn parallelen oder im Wesentlichen parallelen Richtung zu führen, vorzugsweise wobei das Führungselement eine Vielzahl von Rollen umfasst, die dazu gestaltet sind, mit dem Trennkörper in Eingriff zu kommen, um den Trennkörper in einer zur Spleißbahn parallelen oder im Wesentlichen parallelen Richtung zu führen.

11. Vorrichtung nach Anspruch 10, wobei die erste Fangeinheit ferner ein erstes Halteelement zum Eingreifen in den Trennkörper umfasst, um den Trennkörper lösbar in einer vorbestimmten Position zu halten;
vorzugsweise wobei der Trennkörper und das erste Halteelement ein Paar magnetisch anziehender Elemente umfassen; und/oder
wobei das erste Halteelement eine erste Öffnung umfasst, die zum Aufnehmen des Trennkörpers durch diese Öffnung gestaltet ist, vorzugsweise wobei die erste Öffnung derart gestaltet und/oder ausgerichtet ist, dass der Trennkörper in die erste Öffnung eintreten kann, wenn der Trennkörper vom Trennantrieb bewegt wird.

12. Vorrichtung nach Anspruch 10 oder 11, wobei die Vorrichtung ferner eine zweite Fangeinheit umfasst, die fest an der Reifenaufbautrommel angebracht ist, wobei die erste und die zweite Fangeinheit auf entgegengesetzten Seiten der Reifenaufbautrommel in einer zur Spleißbahn parallelen Richtung angeordnet sind.

13. Vorrichtung nach Anspruch 12, wobei die zweite Fangeinheit ein zweites Halteelement umfasst, das, zumindest in einer vorgeschobenen Position, zumindest teilweise radial oberhalb der Arbeitsfläche positioniert ist, wobei das zweite Halteelement dazu gestaltet ist, den Trennkörper lösbar zu halten;
vorzugsweise wobei das zweite Halteelement ferner eine zweite Öffnung umfasst, die zum Aufnehmen des Trennkörpers durch diese Öffnung gestaltet ist, vorzugsweise wobei die zweite Öffnung derart gestaltet und/oder ausgerichtet ist, dass der Trennkörper in die zweite Öffnung eintreten kann, wenn der Trennkörper vom Trennantrieb bewegt wird; und/oder
wobei die zweite Fangeinheit dazu eingerichtet ist, das zweite Halteelement zwischen der vorgeschobenen Position und einer zurückgezogenen Position zu bewegen, in der das zweite Halteelement radial unterhalb der Arbeitsfläche positioniert ist.

14. Vorrichtung nach einem der vorhergehenden Ansprüche, wobei der Trennantrieb ferner eine Trennkopplung zum lösbaren Koppeln des Trennkörpers mit dem Trennantrieb umfasst, vorzugsweise wobei die Trennkopplung mit dem Trennkörper und der Kopplungsanordnung gekoppelt und zumindest teilweise zwischen ihnen angeordnet ist.

15. Vorrichtung nach einem der vorhergehenden Ansprüche, wobei die Kopplungsanordnung eine längliche Öffnung umfasst, die sich in einer Richtung parallel oder im Wesentlichen parallel zur Korrekturrichtung und/oder konzentrisch oder im Wesentlichen konzentrisch zur Arbeitsfläche erstreckt, wobei die Trennkopplung einen Vorsprung umfasst, wobei zumindest ein Teil des Vorsprungs in der länglichen Öffnung angeordnet ist, wobei eine Breite des Vorsprungs in einer Längsrichtung der länglichen Öffnung kleiner ist als die Länge der länglichen Öffnung in der Längsrichtung.

16. Vorrichtung nach einem der vorhergehenden Ansprüche, wobei der Trennkörper eine längliche Öffnung umfasst, die sich in einer Richtung parallel oder im Wesentlichen parallel zur Korrekturrichtung und/oder konzentrisch oder im Wesentlichen konzentrisch zur Arbeitsfläche erstreckt, wobei die Kopplungsanordnung einen Vorsprung umfasst, wobei zumindest ein Teil des Vorsprungs in der länglichen Öffnung angeordnet ist, wobei eine Breite des Vorsprungs in einer Längsrichtung der länglichen Öffnung kleiner ist als die Länge der länglichen Öffnung in der Längsrichtung.

17. Vorrichtung nach einem der vorhergehenden Ansprüche, wobei die Kopplungsanordnung ein nachgiebiges Element umfasst, das dazu gestaltet ist, es dem Trennkörper zu ermöglichen, sich zumindest teilweise an die durch den Antrieb entlang der Korrekturrichtung bewirkte Bewegung der Arbeitsfläche anzupassen, vorzugsweise wobei das nachgiebige Element Gummi oder eine Feder umfasst, vorzugsweise wobei die Feder eine Spirale einer Blattfeder ist.

18. Vorrichtung nach einem der vorhergehenden Ansprüche, wobei der Trennantrieb dazu eingerichtet ist, sowohl die Spleißeinheit als auch den Trennkörper entlang einer zur Spleißbahn parallelen oder im Wesentlichen parallelen Richtung zu bewegen.

19. Vorrichtung nach einem der vorhergehenden Ansprüche, wobei die Vorrichtung ferner einen Detektor umfasst, der zum Erfassen einer Position oder eine Reihe von Positionen des Vorderendes und/oder des Hinterende eingerichtet ist, vorzugsweise wobei die Vorrichtung mit einer Steuereinheit versehen ist, die mit dem Detektor betriebsmäßig verbunden ist, um Daten vom Detektor zu empfangen, wobei die Steuereinheit dazu konfiguriert ist, eine Position oder eine Reihe von Positionen des Hinterendes und/oder des Vorderendes relativ zur Spleißbahn zu bestimmen;
vorzugsweise wobei der Detektor an der Spleißeinheit angebracht ist, vorzugsweise wobei der Detektor auf einer dem Trennantrieb abgewandten Seite der Spleißeinheit angeordnet ist; und/oder
wobei die Spleißeinheit ferner einen Satz Spleißräder umfasst, die dazu gestaltet sind, mit einer einstellbaren Drehgeschwindigkeit drehangetrieben zu werden, um das Vorderende während des Spleißens des Vorderendes mit dem Hinterende zum Hinterende zu ziehen, wobei die Drehgeschwindigkeit auf der Grundlage eines bestimmten Versatzes des Vorderendes und/oder des Hinterendes einstellbar ist, wobei der Versatz durch den Detektor bestimmt wird.

20. Vorrichtung nach einem der vorhergehenden Ansprüche, wobei der Trennkörper ein starrer Körper ist, vorzugsweise wobei der Trennkörper eine längliche Stange oder eine längliche Platte umfasst.

21. Verfahren zum Spleißen eines Vorderendes eines Reifenbestandteils mit einem Hinterende desselben oder einem anderen Reifenbestandteil, wobei das Verfahren die folgenden Schritte umfasst:
- Bereitstellen einer Reifenaufbautrommel, die eine umlaufende Arbeitsfläche zum Abstützen des einen oder der mehreren Reifenbestandteile umfasst;
- Bereitstellen eines Trennkörpers, der eine Auflagefläche umfasst, und Anordnen des Trennkörpers in einem Abstand zur Reifenaufbautrommel, wobei die Auflagefläche von der Arbeitsfläche abgewandt ist;
- Bereitstellen und Anordnen des Vorderendes des Reifenbestandteils und des Hinterendes desselben oder des anderen Reifenbestandteils auf der Auflagefläche;
- Bereitstellen einer Spleißeinheit mit einem Spleißkopf, der entlang einer Spleißbahn bewegbar ist, um das Vorderende mit dem Hinterende zu spleißen;
- Bestimmen einer Abweichung zwischen einer Mitte zwischen dem Vorderende und dem Hinterende und der Spleißbahn entlang einer Korrekturrichtung, wobei die Korrekturrichtung senkrecht zur Spleißbahn und senkrecht zu einer radialen Linie der Reifenaufbautrommel ist, die den Trennkörper in einer Trennposition schneidet;
- Bewegen des Spleißkopfs entlang der Spleißbahn, um das Vorderende mit dem Hinterende zu spleißen; und
- vor und/oder während des Spleißens Drehen der Arbeitsfläche um eine erste Drehachse und Erzeugen einer Korrekturbewegung der Arbeitsfläche in einer Umfangsrichtung um die erste Drehachse, wobei die Korrekturbewegung der Arbeitsfläche eine erste Vektorkomponente in der Korrekturrichtung umfasst, und Bewegen des Trennkörpers mit einer zweiten Vektorkomponente in der Korrekturrichtung, um der Korrekturbewegung der Arbeitsfläche zumindest teilweise zu folgen, um die Abweichung zu verringern.

22. Verfahren nach Anspruch 21, wobei das Verfahren ferner den folgenden Schritt umfasst, der vor dem Schritt des Bereitstellens und Anordnens des Vorderendes des Reifenbestandteils und des Hinterendes desselben oder des anderen Reifenbestandteils auf der Auflagefläche ausgeführt wird:
- Bewegen des Trennkörpers von einer zurückgezogenen Position zu einer vorgeschobenen Position in einer zur Spleißbahn parallelen oder im Wesentlichen parallelen Richtung, wobei der Trennkörper in der vorgeschobenen Position die Arbeitsfläche zumindest teilweise bedeckt, vorzugsweise wobei der Trennkörper in der zurückgezogenen Position in der Richtung entlang der Spleißbahn neben der Reifenaufbautrommel angeordnet ist; und/oder
wobei die Spleißeinheit ferner einen Satz Spleißräder umfasst, wobei das Verfahren ferner den folgenden Schritt umfasst:
- Drehen des Satzes Spleißräder während des Spleißens des Vorderendes mit dem Hinterende mit einer Drehgeschwindigkeit, wobei die Drehgeschwindigkeit auf der Grundlage eines bestimmten Versatzes zwischen dem Vorderende und dem Hinterende in der Korrekturrichtung gesteuert wird.

## Revendications

1. Appareil destiné à l'épissage d'une extrémité avant d'un composant de pneu à une extrémité arrière du même composant ou d'un autre composant de pneu, l'appareil comprenant:
une unité d'épissage ayant une tête d'épissage qui est mobile le long d'une piste d'épissage pour épisser l'extrémité avant à l'extrémité arrière;
un tambour de confection de pneu comprenant une surface de travail périphérique destinée à supporter le composant de pneu, la surface de travail étant disposée à distance de et tournée vers la tête d'épissage, et le tambour de confection de pneu comprenant un entraînement destiné à faire tourner la surface de travail autour d'un premier axe de rotation et à générer un mouvement de correction de la surface de travail dans une direction périphérique autour dudit premier axe de rotation;
un corps de séparateur destiné à séparer l'extrémité avant et l'extrémité arrière vis-à-vis de la surface de travail, le corps de séparateur étant disposé entre ou au moins sensiblement entre la tête d'épissage et la surface de travail lorsqu'il est considéré dans une direction s'étendant perpendiculairement vers l'extérieur à partir de la surface de travail, le corps de séparateur comprenant une surface de support sur un côté du corps de séparateur opposé à la surface de travail pour supporter l'extrémité avant et l'extrémité arrière à une distance de la surface de travail, la direction de correction s'étendant perpendiculairement à une ligne radiale du tambour de confection de pneu qui coupe le corps de séparateur dans une position de séparation; et
un entraînement de séparateur destiné à déplacer le corps de séparateur dans une direction parallèle ou sensiblement parallèle à la piste d'épissage,
dans lequel le mouvement de correction de la surface de travail comprend une première composante vectorielle dans une direction de correction perpendiculaire à la piste d'épissage pour positionner l'extrémité avant et l'extrémité arrière par rapport à la piste d'épissage après la mise en place du composant de pneu sur le tambour de confection de pneu et de l'extrémité avant et de l'extrémité arrière sur la surface de support du corps de séparateur;
dans lequel l'entraînement de séparateur comprend un ensemble de couplage qui est configuré pour permettre au corps de séparateur de se déplacer avec une seconde composante vectorielle dans la direction de correction afin de suivre au moins partiellement le mouvement de correction de la surface de travail.

2. Appareil selon la revendication 1, dans lequel l'entraînement est configuré pour faire tourner la surface de travail par rapport à la piste d'épissage autour du premier axe de rotation et/ou pour générer le mouvement de correction de la surface de travail par rapport à la piste d'épissage dans la direction périphérique autour dudit premier axe de rotation.

3. Appareil selon la revendication 1 ou 2, dans lequel la première composante vectorielle et la seconde composante vectorielle ont une amplitude identique ou sensiblement identique.

4. Appareil selon l'une quelconque des revendications précédentes, dans lequel la direction du mouvement de correction de l'entraînement est parallèle ou sensiblement parallèle à la direction de correction et perpendiculaire ou sensiblement perpendiculaire à la piste d'épissage.

5. Appareil selon l'une quelconque des revendications précédentes, dans lequel le corps de séparateur est apte à être relié à l'entraînement et dans lequel l'ensemble de couplage de l'entraînement de séparateur assure une mobilité du corps de séparateur qui est configurée pour déplacer le corps de séparateur conjointement avec la surface de travail.

6. Appareil selon l'une quelconque des revendications précédentes, dans lequel l'ensemble de couplage comprend un premier élément de couplage couplé au corps de séparateur, dans lequel le premier élément de couplage est configuré pour assurer une mobilité linéaire ou sensiblement linéaire du corps de séparateur en va-et-vient dans une deuxième direction qui est perpendiculaire ou sensiblement perpendiculaire au premier axe de rotation, et dans lequel la deuxième direction est sensiblement perpendiculaire à la ligne radiale.

7. Appareil selon l'une quelconque des revendications précédentes, dans lequel l'ensemble de couplage comprend un premier élément de couplage couplé au corps de séparateur, dans lequel le premier élément de couplage est configuré pour assurer une mobilité du corps de séparateur en va-et-vient dans une deuxième direction le long d'une ligne arquée ou d'une ligne sensiblement arquée qui est concentrique ou sensiblement concentrique à la surface de travail du tambour de confection de pneu, dans lequel la deuxième direction est perpendiculaire ou sensiblement perpendiculaire à la ligne radiale.

8. Appareil selon la revendication 6 ou 7, dans lequel l'ensemble de couplage comprend en outre un deuxième élément de couplage destiné à permettre une rotation du corps de séparateur autour d'un deuxième axe de rotation, le deuxième axe de rotation étant espacé de et parallèle ou sensiblement parallèle au premier axe de rotation;
de préférence dans lequel le deuxième élément de couplage est couplé au, et disposé entre, le premier élément de couplage et le corps de séparateur, l'ensemble de couplage comprenant en outre un troisième élément de couplage couplé au premier élément de couplage pour permettre:
une rotation du corps de séparateur autour d'un troisième axe de rotation, le troisième axe de rotation étant parallèle ou sensiblement parallèle au premier axe de rotation, et espacé du premier axe de rotation et du deuxième axe de rotation, ou
un mouvement linéaire ou sensiblement linéaire du corps de séparateur dans une troisième direction, ladite troisième direction étant perpendiculaire ou sensiblement perpendiculaire à la deuxième direction, et la troisième direction étant parallèle ou sensiblement parallèle à la ligne radiale du tambour de confection de pneu qui coupe le corps de séparateur dans la position de séparation;
de façon davantage préférée dans lequel le corps de séparateur est directement couplé au deuxième élément de couplage, le deuxième élément de couplage étant directement couplé au premier élément de couplage et/ou le premier élément de couplage étant directement couplé au troisième élément de couplage.

9. Appareil selon l'une quelconque des revendications 6 à 8, dans lequel l'entraînement de séparateur comprend en outre une unité d'entraînement de séparateur destinée à entraîner le corps de séparateur dans la direction parallèle ou sensiblement parallèle à la piste d'épissage, dans lequel un ou plusieurs parmi le premier élément de couplage, le deuxième élément de couplage et/ou le troisième élément de couplage est/sont disposé(s) entre le corps de séparateur et l'unité d'entraînement de séparateur.

10. Appareil selon l'une quelconque des revendications précédentes, dans lequel l'appareil comprend en outre une première unité de réception fixée de manière rigide au tambour de confection de pneu, dans lequel la première unité de réception comprend un élément de guidage disposé à distance du tambour de confection de pneu et tourné vers la surface de travail, dans lequel l'élément de guidage est configuré pour guider le corps du séparateur dans une direction parallèle ou sensiblement parallèle à la piste d'épissage, de préférence dans lequel l'élément de guidage comprend une pluralité de rouleaux configurés pour venir en prise avec le corps de séparateur afin de guider le corps de séparateur dans une direction parallèle ou sensiblement parallèle à la piste d'épissage.

11. Appareil selon la revendication 10, dans lequel la première unité de réception comprend en outre un premier élément de maintien destiné à venir en prise avec le corps de séparateur afin de maintenir de manière amovible le corps de séparateur dans une position prédéterminée;
de préférence dans lequel le corps de séparateur et le premier élément de maintien comprennent une paire d'éléments à attraction magnétique; et/ou
dans lequel le premier élément de maintien comprend une première ouverture configurée pour recevoir le corps de séparateur à travers ladite ouverture, de préférence dans lequel la première ouverture est configurée et/ou alignée de manière à permettre au corps de séparateur d'entrer dans la première ouverture lorsque le corps de séparateur est déplacé par l'entraînement de séparateur.

12. Appareil selon la revendication 10 ou 11, dans lequel l'appareil comprend en outre une seconde unité de réception fixée de manière rigide au tambour de confection de pneu, les première et seconde unités de réception étant disposées sur des côtés opposés du tambour de confection de pneu dans une direction parallèle à la piste d'épissage.

13. Appareil selon la revendication 12, dans lequel la seconde unité de réception comprend un second élément de maintien qui, au moins dans une position avancée, est positionné au moins partiellement radialement au-dessus de la surface de travail, le second élément de maintien étant configuré pour maintenir de manière amovible le corps de séparateur;
de préférence dans lequel le second élément de maintien comprend en outre une seconde ouverture configurée pour recevoir le corps de séparateur à travers ladite ouverture, de préférence la seconde ouverture étant configurée et/ou alignée de manière à permettre au corps de séparateur d'entrer dans la seconde ouverture lorsque le corps de séparateur est déplacé par l'entraînement de séparateur ; et/ou
dans lequel la seconde unité de réception est configurée pour déplacer le second élément de maintien entre la position avancée et une position rétractée dans laquelle le second élément de maintien est positionné radialement au-dessous de la surface de travail.

14. Appareil selon l'une quelconque des revendications précédentes, dans lequel l'entraînement de séparateur comprend en outre un couplage de séparateur destiné à coupler de manière amovible le corps de séparateur à l'entraînement de séparateur, de préférence le couplage de séparateur étant couplé à et disposé au moins partiellement entre le corps de séparateur et l'ensemble de couplage.

15. Appareil selon l'une quelconque des revendications précédentes, dans lequel l'ensemble de couplage comprend une ouverture allongée qui s'étend dans une direction parallèle ou sensiblement parallèle à la direction de correction et/ou concentrique ou sensiblement concentrique à la surface de travail, le couplage de séparateur comprenant une saillie, au moins une partie de la saillie étant disposée dans l'ouverture allongée, une largeur de la saillie dans une direction longitudinale de l'ouverture allongée étant inférieure à la longueur de l'ouverture allongée dans la direction longitudinale.

16. Appareil selon l'une quelconque des revendications précédentes, dans lequel le corps de séparateur comprend une ouverture allongée qui s'étend dans une direction parallèle ou sensiblement parallèle à la direction de correction et/ou concentrique ou sensiblement concentrique à la surface de travail, l'ensemble de couplage comprenant une saillie, au moins une partie de la saillie étant disposée dans l'ouverture allongée, une largeur de la saillie dans la direction longitudinale de l'ouverture allongée étant inférieure à la longueur de l'ouverture allongée dans la direction longitudinale.

17. Appareil selon l'une quelconque des revendications précédentes, dans lequel l'ensemble de couplage comprend un élément élastique configuré pour permettre au corps de séparateur de se conformer, au moins partiellement, au mouvement de la surface de travail effectué par l'entraînement le long de la direction de correction, de préférence l'élément élastique comprenant du caoutchouc ou un ressort, de préférence le ressort étant une spirale ou un ressort à lame.

18. Appareil selon l'une quelconque des revendications précédentes, dans lequel l'entraînement de séparateur est configuré pour déplacer à la fois l'unité d'épissage et le corps de séparateur le long d'une direction parallèle ou sensiblement parallèle à la piste d'épissage.

19. Appareil selon l'une quelconque des revendications précédentes, dans lequel l'appareil comprend en outre un détecteur configuré pour détecter une position ou une série de positions de l'extrémité avant et/ou de l'extrémité arrière, de préférence dans lequel l'appareil comporte une unité de commande reliée de manière fonctionnelle au détecteur pour recevoir des données provenant du détecteur, dans lequel l'unité de commande est configurée pour déterminer une position ou une série de positions de l'extrémité arrière et/ou de l'extrémité avant par rapport à la piste d'épissage;
de préférence dans lequel le détecteur est fixé à l'unité d'épissage, de préférence dans lequel le détecteur est disposé sur un côté de l'unité d'épissage opposé à l'entraînement de séparateur; et/ou
dans lequel l'unité d'épissage comprend en outre un ensemble de roues d'épissage configurées pour être entraînées en rotation à une vitesse de rotation réglable afin de tirer l'extrémité avant vers l'extrémité arrière pendant l'épissage de l'extrémité avant à l'extrémité arrière, la vitesse de rotation étant réglable en fonction d'un décalage déterminé de l'extrémité avant et/ou de l'extrémité arrière, ledit décalage étant déterminé par le détecteur.

20. Appareil selon l'une quelconque des revendications précédentes, dans lequel le corps de séparateur est un corps rigide, de préférence dans lequel le corps de séparateur comprend une barre allongée ou une plaque allongée.

21. Procédé d'épissage d'une extrémité avant d'un composant de pneu à une extrémité arrière du même composant ou d'un autre composant de pneu, dans lequel le procédé comprend les étapes suivantes:
- fournir un tambour de confection de pneu qui comprend une surface de travail périphérique destinée à supporter le/les composant(s) de pneu;
- fournir un corps de séparateur qui comprend une surface de support et disposer le corps de séparateur à une distance du tambour de confection de pneu, la surface de support étant opposée à la surface de travail;
- fournir et disposer l'extrémité avant du composant de pneu et de l'extrémité arrière de ce même composant ou de l'autre composant de pneu sur la surface de support;
- fournir une unité d'épissage ayant une tête d'épissage qui est mobile le long d'une piste d'épissage pour épisser l'extrémité avant à l'extrémité arrière;
- déterminer un écart entre un centre situé entre l'extrémité avant et l'extrémité arrière, et la piste d'épissage le long d'une direction de correction, la direction de correction étant perpendiculaire à la piste d'épissage et perpendiculaire à une ligne radiale du tambour de confection de pneu qui coupe le corps de séparateur dans une position de séparation;
- déplacer la tête d'épissage le long de la piste d'épissage pour épisser l'extrémité avant à l'extrémité arrière; et
- avant et/ou pendant ledit épissage, faire tourner la surface de travail autour d'un premier axe de rotation et générer un mouvement de correction de la surface de travail dans une direction périphérique autour dudit premier axe de rotation, le mouvement de correction de la surface de travail comprenant une première composante vectorielle dans la direction de correction, et déplacer le corps de séparateur avec une seconde composante vectorielle dans la direction de correction afin de suivre au moins partiellement le mouvement de correction de la surface de travail, dans le but de réduire ledit écart.

22. Procédé selon la revendication 21, dans lequel le procédé comprend en outre l'étape suivante, effectuée avant l'étape consistant fournir et disposer l'extrémité avant du composant de pneu et l'extrémité arrière de ce même composant ou de l'autre composant de pneu sur la surface de support:
- déplacer le corps de séparateur d'une position rétractée vers une position avancée dans une direction parallèle ou sensiblement parallèle à la piste d'épissage, le corps de séparateur dans la position avancée recouvrant au moins partiellement la surface de travail, de préférence le corps de séparateur dans la position rétractée étant disposé dans la direction le long de la piste d'épissage à côté du tambour de confection de pneu; et/ou
dans lequel l'unité d'épissage comprend en outre un ensemble de roues d'épissage, le procédé comprenant en outre l'étape suivante:
- faire tourner l'ensemble de roues d'épissage pendant l'épissage de l'extrémité avant à l'extrémité arrière à une vitesse de rotation, la vitesse de rotation étant commandée sur la base d'un décalage déterminé entre l'extrémité avant et l'extrémité arrière dans la direction de correction.
